(19) Europäisches Patentamt / European Patent Office / Office européen des brevets

(11) **EP 2 833 274 A1**

(12) **EUROPEAN PATENT APPLICATION**
published in accordance with Art. 153(4) EPC

(43) Date of publication:
**04.02.2015 Bulletin 2015/06**

(51) Int Cl.:
*G06F 17/30* (2006.01)   *G06F 21/62* (2013.01)
*G09C 1/00* (2006.01)

(21) Application number: **13768719.0**

(22) Date of filing: **18.03.2013**

(86) International application number:
**PCT/JP2013/001825**

(87) International publication number:
**WO 2013/145627 (03.10.2013 Gazette 2013/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.03.2012 JP 2012078222**

(71) Applicant: **NEC Corporation Tokyo 108-8001 (JP)**

(72) Inventor: **FURUKAWA, Jun Tokyo 108-8001 (JP)**

(74) Representative: **Vossius & Partner Siebertstrasse 4 81675 München (DE)**

(54) **ENCRYPTED DATABASE SYSTEM, CLIENT TERMINAL, DATABASE SERVER, DATA LINKING METHOD, AND PROGRAM**

(57)    An encrypted database system or the like, which make it possible to perform linking between a plurality of tables without decrypting them and further to reduce a risk of the data correlation leaking out, is provided. A client terminal (10) encrypts an inputted first table having data in a-th and b-th columns and an inputted second table having data in c-th column by the use of a secret key stored in advance and outputs the encrypted first and second tables to an encrypted database server (50), and sends a partial link command to perform linking between the encrypted first and second tables in terms of data having a value q in the a-th column using the b-th and c-th columns as keys, to the encrypted database server (50), along with a search key generated from the secret key. The encrypted database server (50) receives and stores the encrypted first and second tables, extracts data having a value q in the a-th column from each of the encrypted first and second tables by the use of the secret key, performs linking together the extracted pieces of data using the b-th and c-th columns as keys, and sends back a result of the linking.

Fig. 7

**Description**

**[Technical Field]**

The present invention relates to an encrypted database system, a client terminal, a database server, a data linking method and a program, and in particular, relates to an encrypted database system or the like which enables reduction of a risk of data correlation leaking out.

**[Background Art]**

With computerization of business core in enterprises and the like, most enterprises have come to possess a large scale database to contain a great amount of data used for business purposes. Because these pieces of data are those important for their businesses, and also from the aspect of personal information protection, they should never leak out to the outside. For this reason, it is often the case that, in such a large scale database, data contained therein is encrypted.

A database can be regarded as a set of a large number of tables. Hereinafter, a description will be given of an encryption method called a searchable encryption, which is described in NPL 1. The searchable encryption is used in a database wherein data contained therein is encrypted (hereafter, referred to as an encrypted database), for the purpose of making linking between two tables without decrypting individual elements.

In this method, a cryptographic hash function Hash and a common key cryptography (Enc,Dec) are used. When a plaintext is expressed by m, an encryption key by k, and a cryptogram by c, the encryption function Enc generates a cryptogram c by c = Enc(k,m). The decryption function Dec decrypts the cryptogram c by m = Dec(k,c).

In the searchable encryption method, a plaintext m is encrypted as shown by a following equation 1, using a set of secret keys (K,k). Its decryption can be processed in the form of a following equation 2.

[Equation 1]

$$C := (C[1], C[2]) = (Hash(K, m), Enc(k, m))$$

[Equation 2]

$$m = Dec(k, C[2])$$

In this method, for the same plaintext, the first element C[1] of its cryptogram is always the same. That is, determination of identity between plaintexts is possible without decrypting their cryptograms, and accordingly, natural linking between tables in terms of the same element is possible.

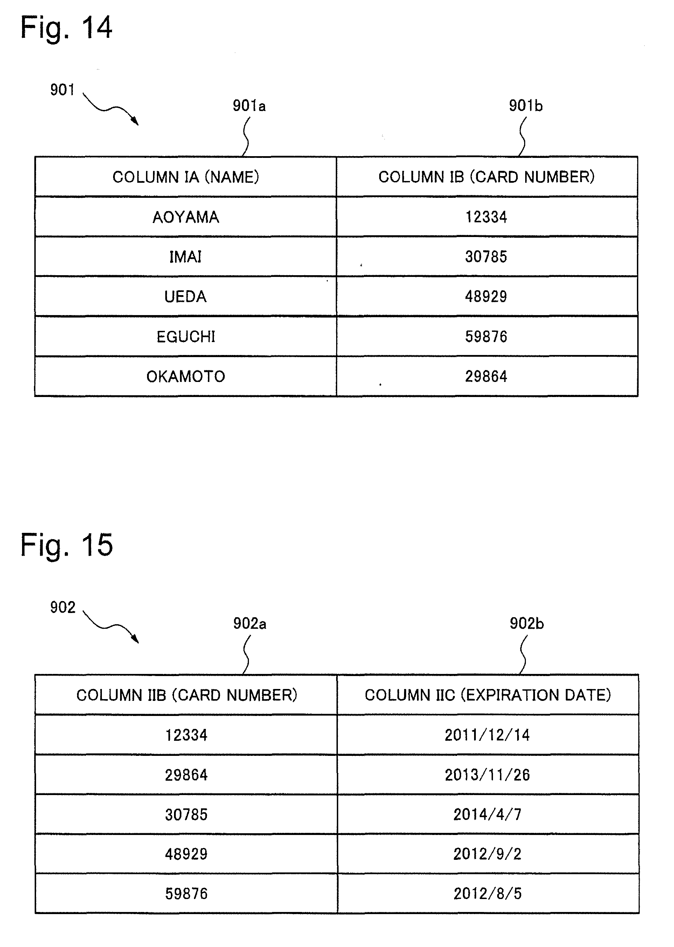

Figs. 14 and 15 are explanatory diagrams showing data in tables before linking, in the searchable encryption method. Fig. 14 shows a table "I" 901, and Fig. 15 shows a table "II" 902. The table "I" 901 has a column "IA" 901a and a column "IB" 901b, and the table "II" 902 has a column "IIB" 902a and a column "IIC" 902b.

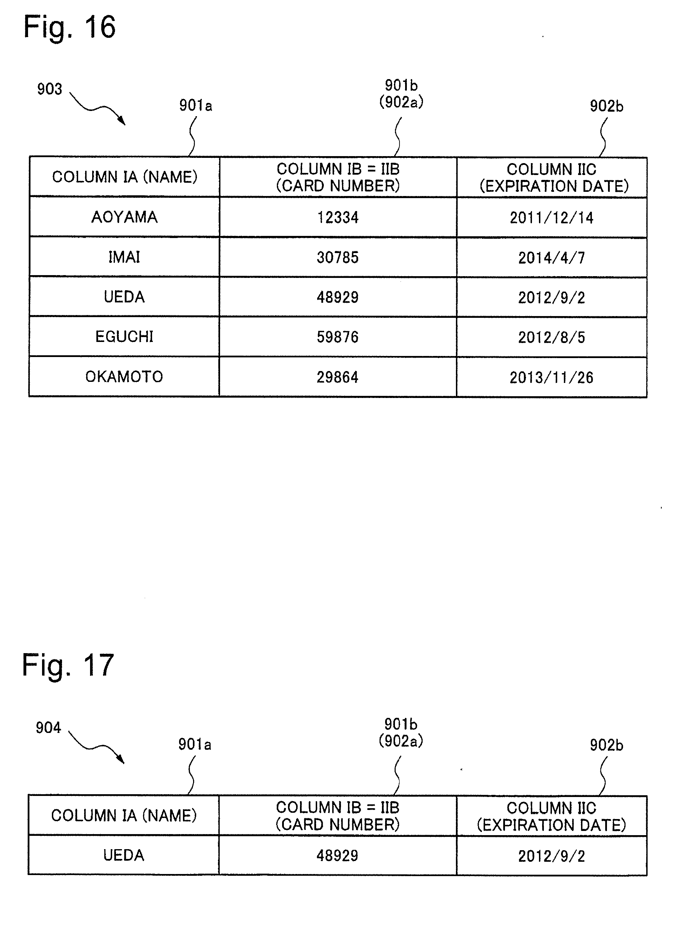

Fig. 16 is an explanatory diagram showing a table "III" 903 which is obtained by linking the table "I" 901 shown in Fig. 14 with the table "II" 902 shown in Fig. 15. Because a column "IB" 901b in the table "I" 901 and a column "IIB" 902a in the table "II" 902 are each a column for "card number", it is possible to link the tables with each other by a condition of column "IB" = column "IIB" (by linking a piece of data having an element value in the column "IB" with a piece of data having the same element value in the column "IIB"). By this way, the table "III" 903 can be obtained.

Fig. 17 is an explanatory diagram showing a table "III'" 904 which is obtained by extracting a row having a value "Ueda" in the column "IA (name)" from the table "III" 903 shown in Fig. 16. In the above-described process, individual elements in the tables "I" 901 and "II" 902 are not encrypted.

However, the above-described process practically needs to be performed in a state where the individual elements are encrypted, without decrypting the individual elements. To enable it, it is necessary to make it possible to determine whether or not an element value in the column "IB" is the same as that in the column "IIB". In this respect, the above-described encryption method referred to as the searchable encryption is used.

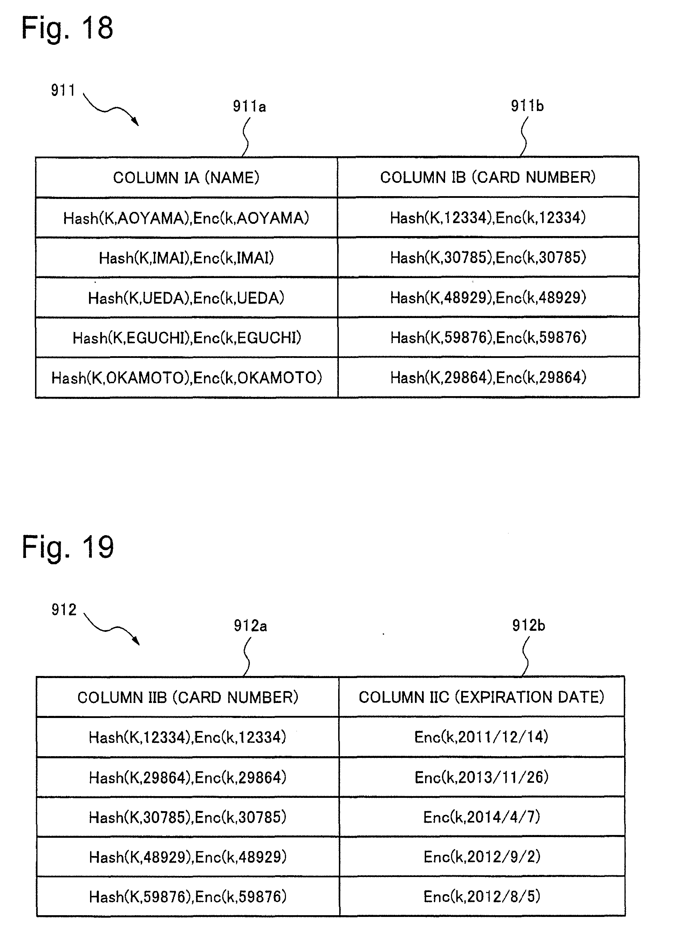

Figs. 18 and 19 are explanatory diagrams showing, respectively, an encrypted table "I" 911 and an encrypted table "II" 912, which are obtained by encrypting the table "I" 901 shown in Fig. 14 and the table "II" 902 shown in Fig. 15, respectively, by the searchable encryption. In the encrypted table "I" 911 and the encrypted table "II" 912, each element is one obtained by encryption according to the above-described equation 1, using the set of secret keys (K,k).

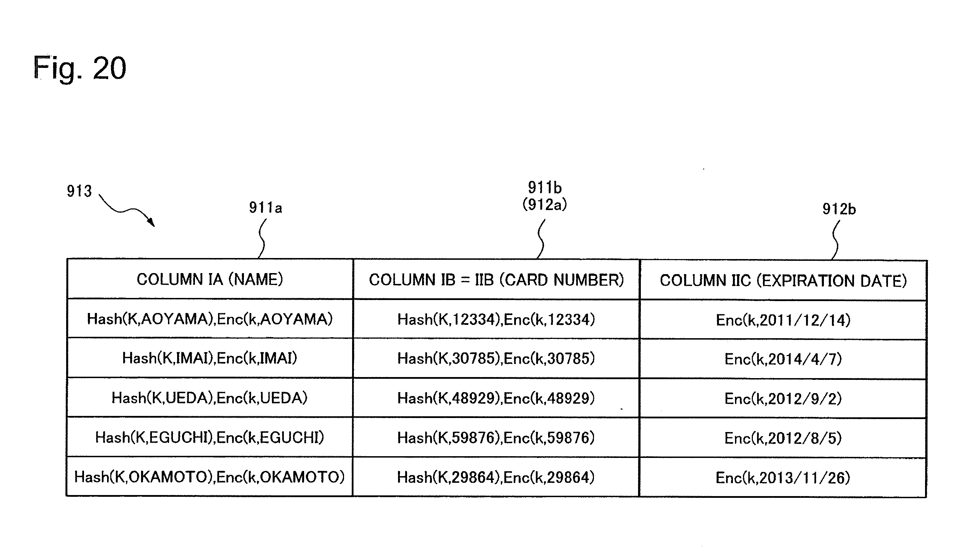

Fig. 20 is an explanatory diagram showing an encrypted table "III" 913 which is obtained by linking the encrypted table "I" 911 shown in Fig. 18 with the encrypted table "II" 912 shown in Fig. 19. In order to link the encrypted table "I" 911 with the encrypted table "II" 912, it is necessary to determine whether or not an element value in the column "IB" 901b is the same as that in the column "IIB" 902a, in the tables before encryption.

When the searchable encryption is used, by determining whether or not Hash(K,m) and Hash(K,m') in encrypted elements give the same value, whether or not m and m' before the encryption are the same can be determined. By this way, the encrypted table "III" 913 can be obtained.

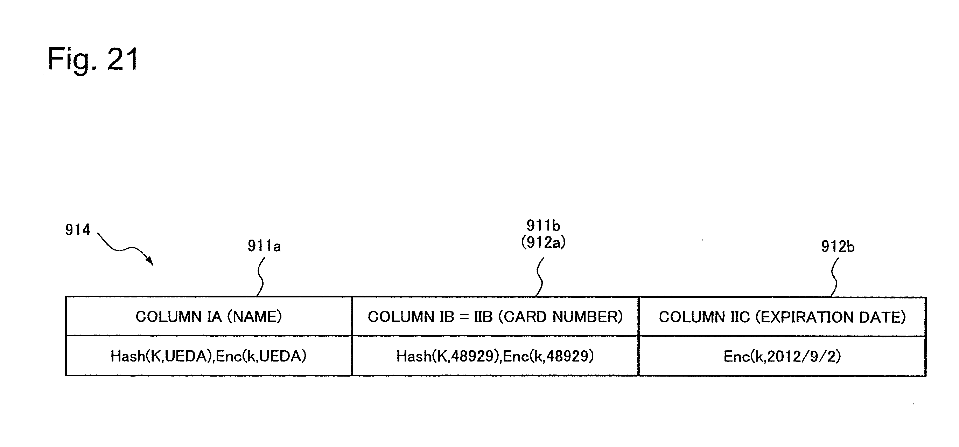

Fig. 21 is an explanatory diagram showing an encrypted table "III'" 914 obtained by extracting a row having a value "Hash(K,Ueda)" in the column "IA (name)" from the encrypted table "III" 913 shown in Fig. 20. As has been described above, the encrypted table "III'" 914 can be obtained without decrypting the individual elements. For a right user having the set of secret keys (K,k), it is possible to know the element in the column "IIC" 902b related to the row extracted into the encrypted table "III'" 914, which is the "expiration date" of a credit card held by a person with the name "Ueda", by decrypting the corresponding element in the encrypted table "III'" 914.

As other technical documents related to the above-described technology, the following ones will be mentioned. PTL 1 describes an encrypted database search device which performs a matching process in a state where a keyword is kept encrypted. PTL 2 describes a technology which generates an index file using an encrypted keyword and thereby enables searching for an encrypted file.

PTL 3 and PTL 4 each describe a technology which reduces a time required for table linking in a distributed database system. PTL 5 describes a keyword search system which enables partial match search by means of information enabling discrimination of whether a search is a hit or not and search information obtained by encrypting the information.

[Citation List]

[Patent Literature]

[PTL 1] Japanese Patent Application Laid-Open No. 2005-134990
[PTL 2] Japanese Patent Application Laid-Open No. 2010-061103
[PTL 3] Japanese Patent Application Laid-Open No. 2010-272030
[PTL 4] Japanese Patent Application Laid-Open No. H04-213765
[PTL 5] Japanese Patent Application Laid-Open No. 2011-147074

[Non Patent Literature]

[NPL 1] G. Amanatidis, A. Boldyreva, and A. O'Neill, "Provably-secure schemes for basic query support in outsourced databases" in S. Barker and G.-J. Ahn, editors, DBSec, volume 4602 of Lecture Notes in Computer Science, pages 14-30, Springer, 2007.

**[Summary of Invention]**

**[Technical Problem]**

As described above, using the searchable encryption described in NPL 1, it is possible to perform linking between tables in a state the tables are kept encrypted and extract a row which matches a certain condition (an element in a specific column being coincident with a designated value).

However, in this method, the tables are linked in terms of also a row other than the one to be obtained finally. With respect to the above-described example, it is necessary for the user to be able to know only the expiration date of a credit card held by "Ueda", but not an expiration date for any other member. Nevertheless, tables produced in this method are such as those shown in Figs. 16 and Fig. 20, in which the expiration dates for other members than "Ueda" also are linked.

This kind of database system is usually operated by a client-server method, and accordingly, through a time period the operation is performed, the data in the tables shown in Figs. 16 and Fig. 20, in which the expiration dates for other members than "Ueda" also are linked, is kept stored in a device on the server side. Therefore, the risk of the data leaking out during the time period cannot be denied.

When each piece of the data is encrypted as shown in Fig. 20, a user not having the set of secret keys (K,k) cannot know any specific name or expiration date. However, the user can estimate at least a relationship between cryptograms from the linking relation. That is, that the tables are linked in terms of also a row other than the one to be obtained finally means that there is a risk of information leakage occurring to an extent more than necessary about the correlation within the data.

Any technology capable of solving this problem is not disclosed even in the above-mentioned PTL 1 to 5. From the start, among PTL 1 to 5, no one refers to the problem. It is therefore natural that the problem cannot be solved by the technologies described in PTL 1 to 5.

The objective of the present invention is to provide an encrypted database system, a client terminal, a database server, a data linking method and a program which make it possible to perform linking between a plurality of encrypted tables in a database without decrypting them and further to reduce a risk of the data correlation leaking out.

[Solution to Problem]

An encrypted database system according to an exemplary aspect of the invention includes: a client terminal which encrypts an inputted first table having data in a-th and b-th columns and an inputted second table having data in c-th column by the use of a secret key stored in advance and outputs the encrypted first and second tables to an encrypted database server, and sends a partial link command to perform linking between the encrypted first and second tables in terms of data having a value q in the a-th column using the b-th and c-th columns as keys, to the encrypted database server, along with a search key generated from the secret key; and the encrypted database server which receives and stores the encrypted first and second tables, performs linking between the encrypted first and second tables in terms of data having a value q in the a-th column using the b-th and c-th columns as keys, in response to the partial link command, and sends back a result of the linking to the client terminal, wherein the encrypted database server extracts data having a value q in the a-th column from each of the encrypted first and second tables by the use of the secret key, and performs linking together the extracted pieces of data using the b-th and c-th columns as keys.

A client terminal according to an exemplary aspect of the invention includes: an encryption means for encrypting an inputted first table having data in a-th and b-th columns and an inputted second table having data in c-th column by the use of a secret key stored in advance and outputting the encrypted first and second tables to an encrypted database server; and a search key generation means for generating a search key by the use of the secret key, wherein the search key generation means sends a partial link command to perform linking between the encrypted first and second tables in terms of data having a value q in the a-th column using the b-th and c-th columns as keys, to the encrypted database server, along with the search key.

An encrypted database server according to an exemplary aspect of the invention includes a search means for receiving an encrypted first table having data in a-th and b-th columns and an encrypted second table having data in c-th column from a client terminal, storing the encrypted first and second tables, performing linking between the encrypted first and second tables in terms of data having a value q in the a-th column using the b-th and c-th columns as keys, in response to a partial link command including a search key received from the client terminal, and outputting a result of the linking to the client terminal, wherein the search means extracts data having a value q in the a-th column from each of the encrypted first and second tables, and performs linking together the extracted pieces of data using the b-th and c-th columns as keys by the use of the secret key.

An encrypted data linking method, in an encrypted database system including a client terminal and an encrypted database server, according to an exemplary aspect of the invention includes: in the client terminal, encrypting an inputted first table having data in a-th and b-th columns and an inputted second table having data in c-th column by the use of a secret key stored in advance, and outputting the encrypted first and second tables to the encrypted database server; in the encrypted database server, receiving and storing the encrypted first and second tables; in the client terminal, sending a partial link command to perform linking between the encrypted first and second tables in terms of data having a value q in the a-th column using the b-th and c-th columns as keys, to the encrypted database server, along with a search key generated from the secret key; and in the encrypted database server, extracting data having a value q in the a-th column from each of the encrypted first and second tables by the use of the secret key, performing linking together the extracted pieces of data using the b-th and c-th columns as keys, and sending back a result of the linking to the client terminal.

A first computer readable storage medium according to an exemplary aspect of the invention records thereon an encrypted data linking program for an encrypted database system including a client terminal and an encrypted database server, causing a computer in the client terminal to execute steps including: encrypting an inputted first table having data in a-th and b-th columns and an inputted second table having data in c-th column by the use of a secret key stored in advance and outputting the encrypted first and second tables to the encrypted database server; and sending a partial link command to perform linking between the encrypted first and second tables in terms of data having a value q in the a-th column using the b-th and c-th columns as keys, to the encrypted database server, along with a search key generated from the secret key.

A second computer readable storage medium according to an exemplary aspect of the invention records thereon an encrypted data linking program for an encrypted database system including a client terminal and an encrypted database server, causing a computer in the encrypted database server to execute steps including: receiving an encrypted first table having data in a-th and b-th columns and an encrypted second table having data in c-th column from a client terminal, and storing the encrypted first and second tables; and in response to a partial link command including a search key received from the client terminal, extracting data having a value q in the a-th column from each of the encrypted first and second tables by the use of the secret key, performing linking together the extracted pieces of data using the b-th and c-th columns as keys, and sending back a result of the linking to the client terminal.

[Advantageous Effect of Invention]

The advantageous effect of the present invention is that it is possible to perform linking between a plurality of encrypted tables in a database without decrypting them and further to reduce a risk of the data correlation leaking out.

[Brief Description of Drawings]

[Fig. 1] An explanatory diagram showing a configuration of an encrypted database system according to a first exemplary embodiment of the present invention.
[Fig. 2] An explanatory diagram illustrating operation of encrypting a table "X" and a table "Y" and sending them to an encrypted database server, performed by a client terminal shown in Fig. 1.
[Fig. 3] An explanatory diagram showing the table "X" before encryption shown in Fig. 2.
[Fig. 4] An explanatory diagram showing the table "Y" before encryption shown in Fig. 2.
[Fig. 5] An explanatory diagram showing an encrypted table "X" resulting from encryption of the table "X" shown in Fig. 3 by the process shown in Fig. 2.
[Fig. 6] An explanatory diagram showing an encrypted table "Y" resulting from encryption of the table "Y" shown in Fig. 4 by the process shown in Fig. 2.
[Fig. 7] An explanatory diagram showing a process, performed by an encrypted database server shown in Fig. 1, of linking the encrypted table "X" and the encrypted table "Y" shown in Figs. 5 and 6, respectively, and then extracting a row having a value q in the column "A".
[Fig. 8] A flow chart showing a process performed by the client terminal and the encrypted database server shown in Fig. 1.
[Fig. 9] An explanatory diagram showing a configuration of an encrypted database system according to a second exemplary embodiment of the present invention.
[Fig. 10] An explanatory diagram illustrating operation of encrypting the table "X" and the table "Y" shown in Figs. 3 and 4, respectively, and sending them to an encrypted database server, performed by a client terminal shown in Fig. 9.
[Fig. 11] An explanatory diagram showing an encrypted table "X" resulting from substitution performed by an encryption/decryption unit shown in Fig. 10.
[Fig. 12] An explanatory diagram showing a process, performed by the encrypted database server shown in Fig. 9, of linking the encrypted table "X" and the encrypted table "Y" shown in Figs. 6 and 11, respectively, and then extracting a row having a value q in the column "A".
[Fig. 13] A flow chart showing a process performed by the client terminal and the encrypted database server shown in Fig. 9.
[Fig. 14] An explanatory diagram showing a table "I" before linking, in a case of the searchable encryption method.
[Fig. 15] An explanatory diagram showing a table "II" before linking, in a case of the searchable encryption method.
[Fig. 16] An explanatory diagram showing a table "III" obtained by linking the table "I" shown in Fig. 14 with the table "II" shown in Fig. 15.
[Fig. 17] An explanatory diagram showing a table "III'" resulting from extraction, from the table "III" shown in Fig. 16, of a row having a value "Ueda" in the column "IA (name)".
[Fig. 18] An explanatory diagram showing an encrypted table "I" resulting from encryption of the table "I" shown in Fig. 14 by the searchable encryption method.
[Fig. 19] An explanatory diagram showing an encrypted table "II" resulting from encryption of the table "II" shown in Fig. 15 by the searchable encryption method.
[Fig. 20] An explanatory diagram showing an encrypted table "III" obtained by linking the encrypted table "I" 911 with the encrypted table "II" 912 shown, respectively, in Figs. 18 and 19.
[Fig. 21] An explanatory diagram showing an encrypted table "III'" resulting from extraction, from the encrypted table "III" shown in Fig. 20, of a row having a value "Hash(K,Ueda)" in the column "IA (name)".
[Fig. 22] An explanatory diagram showing a basic configuration of the encrypted database system according to the first exemplary embodiment of the present invention.

**[Description of Embodiments]**

(first exemplary embodiment)

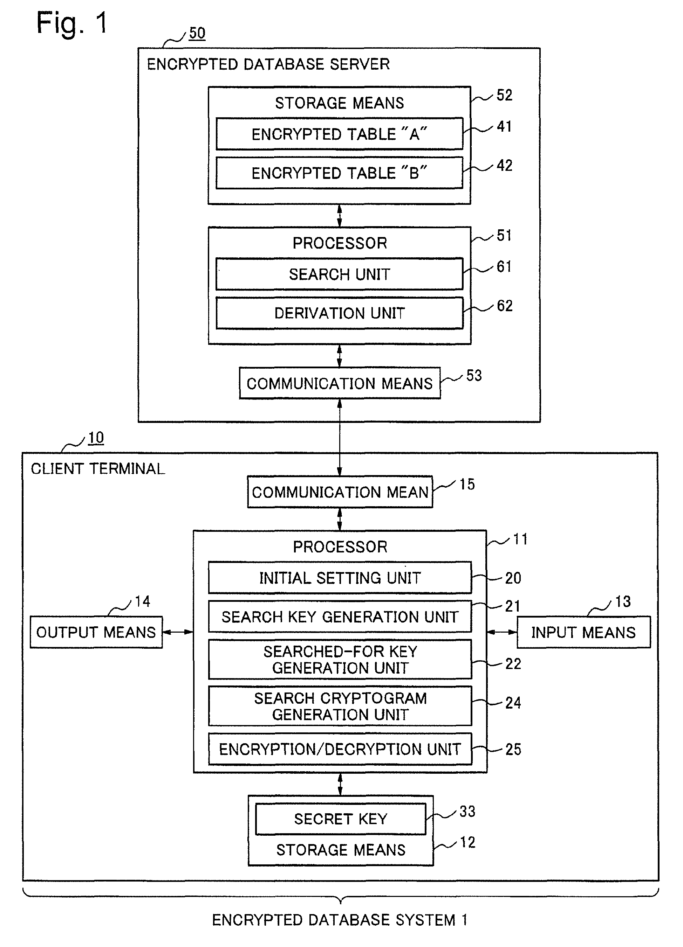

Hereinafter, a configuration of a first exemplary embodiment of the present invention will be described, with reference to Figs. 1, 2, 7 and 22.

Basic content of the present exemplary embodiment will be described first, and more specific content will be described after that.

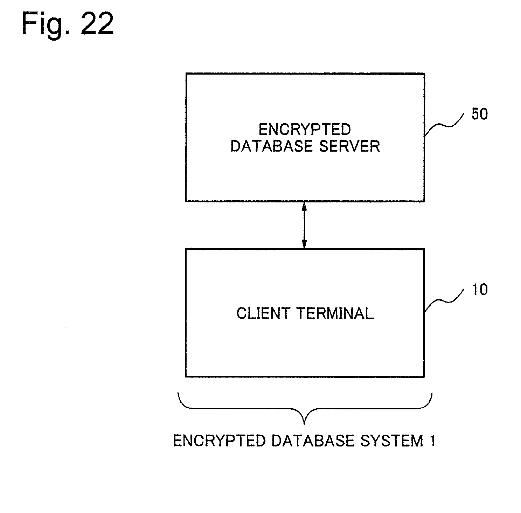

Fig. 22 is an explanatory diagram showing a basic configuration of an encrypted database system 1 according to a first exemplary embodiment of the present invention.

The encrypted database system 1 according to the present exemplary embodiment comprises a client terminal 10 and an encrypted database server 50. The client terminal 10 encrypts, by the use of a secret key 33 stored in advance, an inputted first table (table "A" 31) having data in the a-th column and in the b-th column and encrypts also an inputted second table (table "B" 32) having data in the c-th column, and outputs the encrypted tables to the encrypted database server 50. The client terminal 10 sends a partial link command to link the encrypted first table with the encrypted second table in terms of data having a value q in the a-th column, using the b-th and c-th columns as keys, to the encrypted database server 50, along with a search key generated from the secret key 33. The encrypted database server 50 receives and stores the encrypted first and second tables. In response to the partial link command, the encrypted database server 50 links the encrypted first and second tables with each other in terms of data having a value q in the a-th column, using the b-th and c-th columns as keys, and sends back the result to the client terminal 10. Here, the encrypted database server 50 extracts, using the search key, each piece of data having a value q in the a-th column from the encrypted first and second tables, and performs linking between the extracted pieces of data using the b-th and c-th columns as keys.

The client terminal 10 includes a search key generation unit 21, a searched-for key generation unit 22, an encryption unit 25 and a search cryptogram generation unit 24. The search key generation unit 21 generates, using the secret key 33, a first search key which is a key for searching for an element in the a-th column of the first table and a second search key which is a key for searching for an element in the b-th column of the first table. The searched-for key generation unit 22 generates, using the secret key 33, a first searched-for key which is a key for being searched for an element having a specific value in the a-th column of the first table and a second searched-for key which is a key for being searched for an element having a specific value in the c-th column of the second table. The encryption unit 25 encrypts each element in the first and second tables using the secret key 33. The search cryptogram generation unit 24 substitutes each element in the a-th column of the first table with the first searched-for key and with the element in the a-th column after the above-described encryption, and substitutes each element in the b-th column with a search cryptogram generated from the first and second search keys and with the element in the b-th column after the encryption. The search cryptogram generation unit 24 also substitutes each element in the c-th column of the second table with the second searched-for key and the element in the c-th column after the encryption. The search cryptogram generation unit 24 sends the substituted first and second tables to the encrypted database server 50 as encrypted first and second tables. Then, the search key generation unit 21 generates, using the secret key 33, a third search key which is a key for searching for an element having a value q in the a-th column of the first table, and sends it to the encrypted database server 50 along with the partial link command.

On the other hand, the encrypted database server 50 includes a search unit 61 and a derivation unit 62. The search unit 61 extracts a row, in the encrypted first table, for which the third search key and the first searched-for key coincide with each other. The derivation unit 62 generates a subject search key from the first search key and the search cryptogram. Then, using the subject search key, the search unit 61 determines, with respect to the extracted row in the encrypted first and second tables, whether or not the value in the b-th column is the same as that in the c-th column, and thereby performs linking.

With this configuration, the encrypted database system 1 can link a plurality of encrypted tables in the database with each other without decrypting them, and can also reduce a risk of the data correlation leaking out.

This will be described in more detail below.

Fig. 1 is an explanatory diagram showing a configuration of the encrypted database system 1 according to the first exemplary embodiment of the present invention. The encrypted database system 1 includes the client terminal 10 and the encrypted database server 50 each being connected with the other via a LAN (Local Area Network) or the like.

The client terminal 10 has a configuration as a general computer. That is, the client terminal 10 includes a processor 11 being the subject executing a computer program, a storage means 12 for storing data, an input means 13 for receiving a user's operation, an output means 14 for presenting a processing result to the user and a communication means 15 for performing data communication with other computers.

In the processor 11, an initial setting unit 20, a search key generation unit 21, a searched-for key generation unit 22, a search cryptogram generation unit 24 and an encryption/decryption unit 25 are configured, each in a form of a computer program, to execute respective ones of functions described later, in response to an operation command from a user. In the storage means 12, the secret key 33 used in a process described below is also stored.

Then, to the input means 13, a table "X" 31 and a table "Y" 32 whose names are "X" and "Y", respectively, are inputted. Hereafter in the present specification, an element having a value "a" in a column named "A" of a table named "X" will be described as an element "a" in a column "A" of a table "X".

The encrypted database server 50 also has a configuration as a general computer. That is, the encrypted database server 50 includes a processor 51 being the subject executing a computer program, a storage means 52 for storing data and a communication means 53 for performing data communication with other computers.

In the processor 51, a search unit 61 and a derivation unit 62 are configured, each in a form of a computer program, to execute respective ones of functions described later, in response to an operation command from the client terminal 10. In the storage means 52, an encrypted table "X" 41 and an encrypted table "Y" 42 sent from the client terminal 10, which are obtained by encrypting, respectively, the table "X" 31 and the table "Y" 32, are also stored.

For each of the means described above, basic operation will be described below. In the client terminal 10 and the encrypted database server 50, various sorts of system variables are inputted or stored in advance. Because those system variables are well-known matters to those skilled in the art, those other than necessary will not be particularly described in the following description.

First, on the side of the client terminal 10, the initial setting unit 20 sets an initial value required for each unit's operation. Its detail will be described later.

The search key generation unit 21 generates, with respect to the column "A" of the table "X" 31 and the element "a" in the column "A", a "search key (X,A,a)" which is a key for searching for the element "a" in the column "A" of the table "X" 31, using the secret key 33. If considered to be a function, the search key generation unit 21 is expressed as a following equation 3.

[equation 3]

$$\text{Secret key} \times \text{Table name} \times \text{Column name} \times \text{Element value} \to \text{Search Key}$$

The searched-for key generation unit 22 generates, with respect to the column "A" of the table "X" 31 and the element "a" in the column "A", a "searched-for key (X,A,a)" which is a key for being searched for the element "a" in the column "A" of the table "X" 31, using the secret key 33. If considered to be a function, the searched-for key generation unit 22 is expressed as a following equation 4.

[equation 4]

$$\text{Secret key} \times \text{Table name} \times \text{Column name} \times \text{Element value} \to \text{Searched - for Key}$$

The search cryptogram generation unit 24 generates, with respect to two search keys "K1" and "K2", a "search cryptogram (K1,K2)" which is information for correlating the search key "K1" to the search key "K2", using the secret key 33. If considered to be a function, the search cryptogram generation unit 24 is expressed as a following equation 5.

[equation 5]

$$\text{Secret Key} \times \text{First search key} \times \text{Second search key} \to \text{Search cryptogram}$$

On the side of the encrypted database server 50, the search unit 61 determines whether a = a' or not with respect to between the "searched-for key (X,A,a)" generated for the element "a" in the column "A" of the table "X" 31 and the "search key (X,A,a')" generated for an element "a'" in the column "A" of the table "X" 31, on the basis of the "searched-for key (X,A,a)" and the "search key (X,A,a')". If considered to be a function, the search unit 61 is expressed as a following equation 6. Here, 0 is considered to mean coincidence, 1 to mean non-coincidence.

[equation 6]

$$\text{Search Key} = \text{Searched - for Key}: \quad \text{Output value} = 0$$
$$\text{Search Key} \neq \text{Searched - for Key}: \quad \text{Output value} = 1$$

The derivation unit 62 uses a search key with respect to the column "A" of the table "X" 31 and the element "a" in the column "A" as "K1 = search key (X,A,a)", a search key with respect to the column "B" of the table "Y" 32 and an element "b" in the column "B", whose existence is assumed, as "K2 = search key (Y,B,b)", and the K2 as a subject search key. Then, the derivation unit 62 derives the subject search key "K2" from the search key "K1" and a "search cryptogram (K1,K2)". If considered to be a function, the derivation unit 62 is expressed as a following equation 7.

[equation 7]

$$\text{Search Key} \times \text{Search cryptogram} \rightarrow \text{Subject search key}$$

Returning to the side of the client terminal 10, the encryption/decryption unit 25 decrypts a cryptogram c by the secret key. The encryption/decryption unit 25 can also encrypt an element m by the secret key in an opposite manner. If considered to be a function, the encryption/decryption unit 25 is expressed as following equations 8 and 9.

[equation 8]

$$\text{Secret key} \times \text{Element} \rightarrow \text{Cryptogram}$$

[equation 9]

$$\text{Secret key} \times \text{Cryptogram} \rightarrow \text{Decryption result}$$

(creation and sending of encrypted tables)

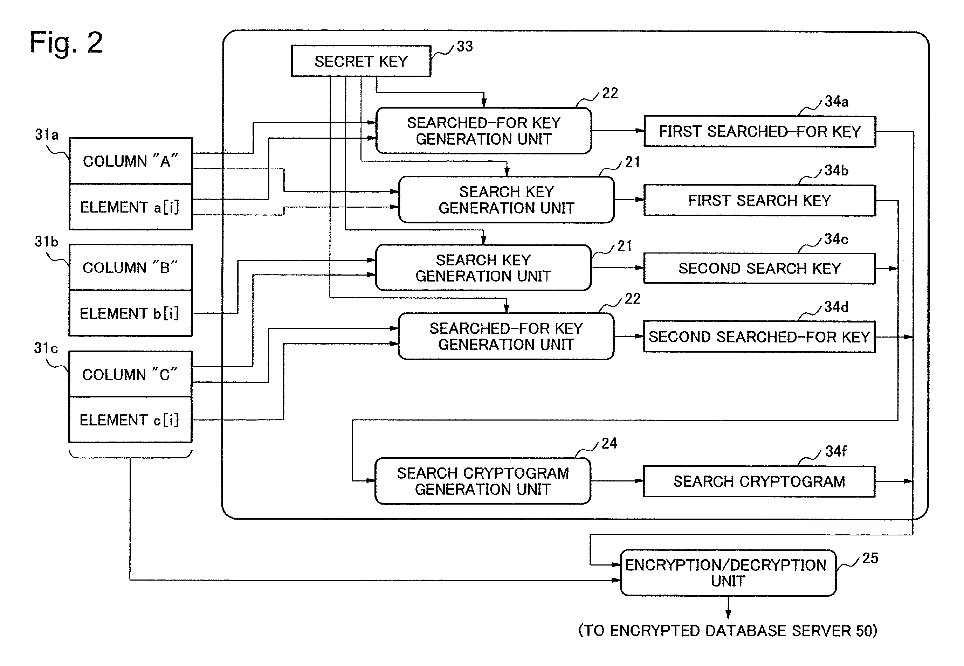

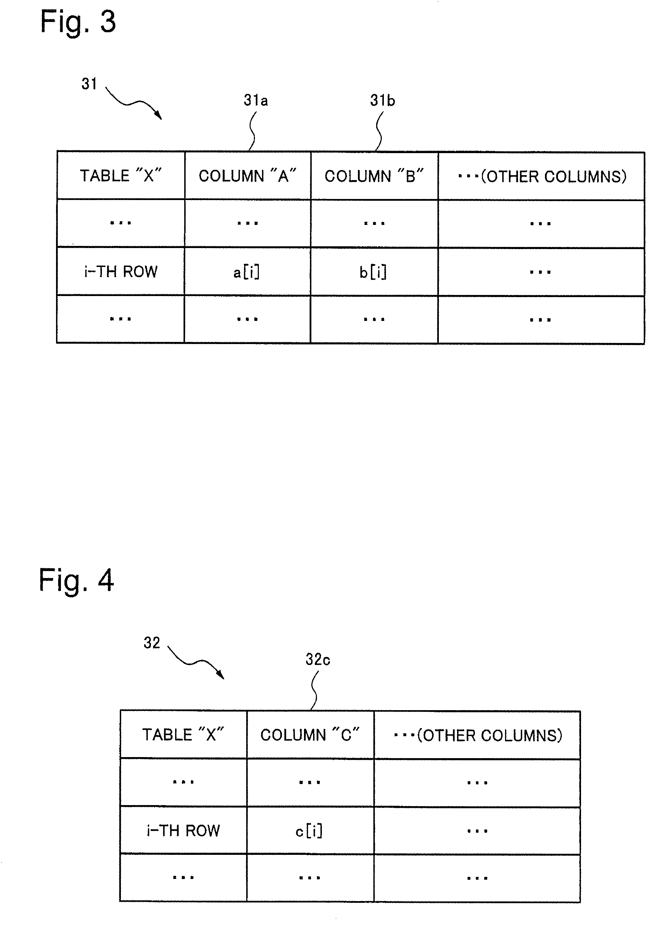

Fig. 2 is an explanatory diagram illustrating operation, by the client terminal 10 shown in Fig. 1, of encrypting the table "X" 31 and the table "Y" 32 and then sending the encrypted tables to the encrypted database server 50. Figs. 3 and 4 are explanatory diagrams showing the table "X" 31 and the table "Y" 32 before the encryption, which have already been shown in Fig. 2. Fig.3 shows the table "X" 31, and Fig. 4 shows the table "Y" 32.

As for the table "X" 31 and the table "Y" 32 which are inputted to the client terminal 10 via the input means 13, a column "A" 31a and a column "B" 31b exist in the former, and a column "C" 32c in the latter. The possible range taken by values in the column "B" 31b is the same as that by values in the column "C" 32c.

The number of rows of the table "X" 31 is a natural number n, and, the i-th element ($1 \leq i \leq n$) in the column "A" 31a of the table "X" 31 and that in the column "B" 31b will be described as "a[i]" and "b[i]", respectively. The number of rows of the table "Y" 32 is a natural number m, and the i-th element ($1 \leq i \leq n$) in the column "C" 32c of the table "Y" 32 will be described as "c[i]".

With respect to each and every value from 1 to n, which i can take, the searched-for key generation unit 22 generates a "searched-for key (X,A,a[i])" expressed by the equation 4, from the table "X" 31, the column "A" 31a, the element "a[i]" and the secret key 33. It is expressed as a first searched-for key 34a in Fig. 2.

With respect to each and every value from 1 to n, which i can take, the search key generation unit 21 generates a "search key (X,A,a[i])" expressed by the equation 3, from the table "X" 31, the column "A" 31a, the element "a[i]" and the secret key 33. It is expressed as a first search key 34b in Fig. 2.

The search key generation unit 21 also generates, with respect to each and every value from 1 to n, which i can take, a "search key (Y,C,b[i])" expressed by the equation 3, from the table "Y" 32, the column "C" 32c, the element "b[i]" in the column B and the secret key 33. It is expressed as a second search key 34c in Fig. 2.

In Fig. 2, the search key generation unit 21 and the searched-for key generation unit 22 each appear at two locations, for the sake of avoiding complication of the diagram. The two search key generation units 21 represent the same constituent, and also do the two searched-for key generation units 22.

With respect to each and every value from 1 to n, which i can take, the search cryptogram generation unit 24 generates a "search cryptogram (first search key, second search key)" expressed by the equation 5, from the first search key 34b, the second search key 34c and the secret key 33. It is expressed as a search cryptogram 34f in Fig. 2.

With respect to each and every value from 1 to n, which i can take, the encryption/decryption unit 25 generates a cryptogram "enc(a[i])" expressed by the equation 8 for each element, from the element "a[i]" and the secret key 33. Similarly, the encryption/decryption unit 25 generates a cryptogram "enc(b[i])" expressed by the equation 8 for each element, from the element "b[i]" and the secret key 33.

Further, the encryption/decryption unit 25 performs, with respect to each and every value from 1 to n, which i can take, substitution of the element "a[i]" in the column "A" 31a of the table "X" 31 with (first searched-for key, enc(a[i])). Similarly, the encryption/decryption unit 25 substitutes the element "b[i]" in the column "B" 31b with (search cryptogram (first search key, second search key), enc(b[i])). Thus substituted table "X" 31 is represented by the encrypted table "X" 41.

On the other hand, the searched-for key generation unit 22 generates, with respect to each and every value from 1 to m, which i can take, "searched-for key (Y,C,c[i])" expressed by the equation 4, from the table "Y" 32, the column "C" 32c, the element "c[i]" in the column C and the secret key 33. It is expressed as a second searched-for key 34d in Fig. 2.

With respect to each and every value from 1 to m, which i can take, the encryption/decryption unit 25 generates a cryptogram "enc(c[i])" expressed by the equation 8 for each element, from the element "c[i]" and the secret key 33. Further, the encryption/decryption unit 25 performs, with respect to each and every value from 1 to m, which i can take, substitution of the element "c[i]" in the column "C" 32c of the table "Y" 32 with (second searched-for key, enc(c[i])). Thus substituted table "Y" 32 is represented by the encrypted table "Y" 42.

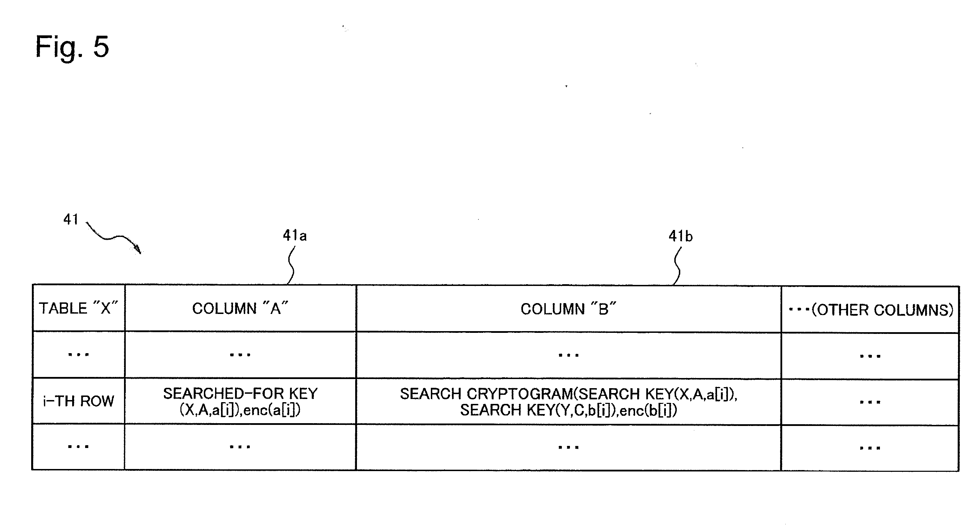

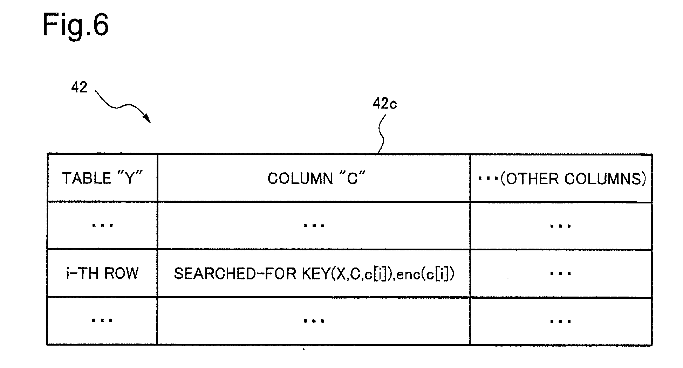

The encryption/decryption unit 25 sends the encrypted table "X" 41 and the encrypted table "Y" 42 created as above to the encrypted database server 50. Figs. 5 and 6 are explanatory diagrams showing, respectively, the encrypted table "X" 41 and the encrypted table "Y" 42 which resulted from the encryption, by the process shown in Fig. 2, of the table "X" 31 shown in Fig. 3 and the table "Y" 32 shown in Fig. 4, respectively. Fig. 5 shows the encrypted table "X" 41, and Fig. 6 shows the encrypted table "Y" 42.

The encrypted database server 50 stores, into the storage means 52, the encrypted table "X" 41 and the encrypted table "Y" 42 received from the client terminal 10. Then, the encrypted database server 50, when receiving a command from the client terminal 10, performs a linking process on the encrypted table "X" 41 and the encrypted table "Y" 42, and sends back a result of the process to the client terminal 10 having made a request for it. The process will be described below.

(linking process on encrypted tables)

Here, it is considered that linking is performed with respect to data whose element "b[i]" in the column "B" and element "c[i]" in the column "C", in the encrypted table "X" 41 and the encrypted table "Y" 42, have the same value. More specifically, in the present exemplary embodiment, the following description will be given of a process of extracting, from an encrypted table "Z" 43, a row for which the value in the column "A" 31a of the encrypted table "X" 41 is q.

It is generally possible to generate a table for limited values in the column "A" 31a from the encrypted table "Z" 43, by designating a plurality of values besides q. This kind of linking process will be described as "partial link" in the present specification.

The client terminal 10 holds the secret key 33 which was used when the encryption was performed to create the encrypted table "X" 41 and the encrypted table "Y" 42, but the encrypted database server 50 does not hold it.

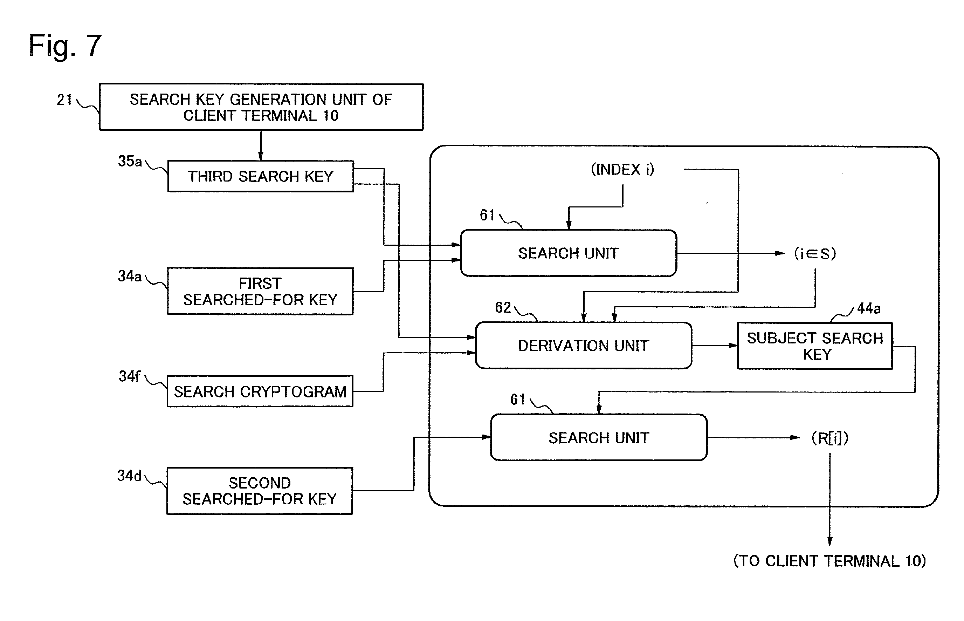

Fig. 7 is an explanatory diagram showing a process, performed by the encrypted database server 50 shown in Fig. 1, of linking the encrypted table "X" 41 shown in Fig. 5 with the encrypted table "Y" 42 shown in Fig. 6 and then extracting a row having a value q in the column "A". First, the search key generation unit 21 of the client terminal 10 generates a "search key (X,A,q)" expressed by the equation 3, from the table "X" 31, the column "A" 31a, the element "a[i]" and the secret key 33.

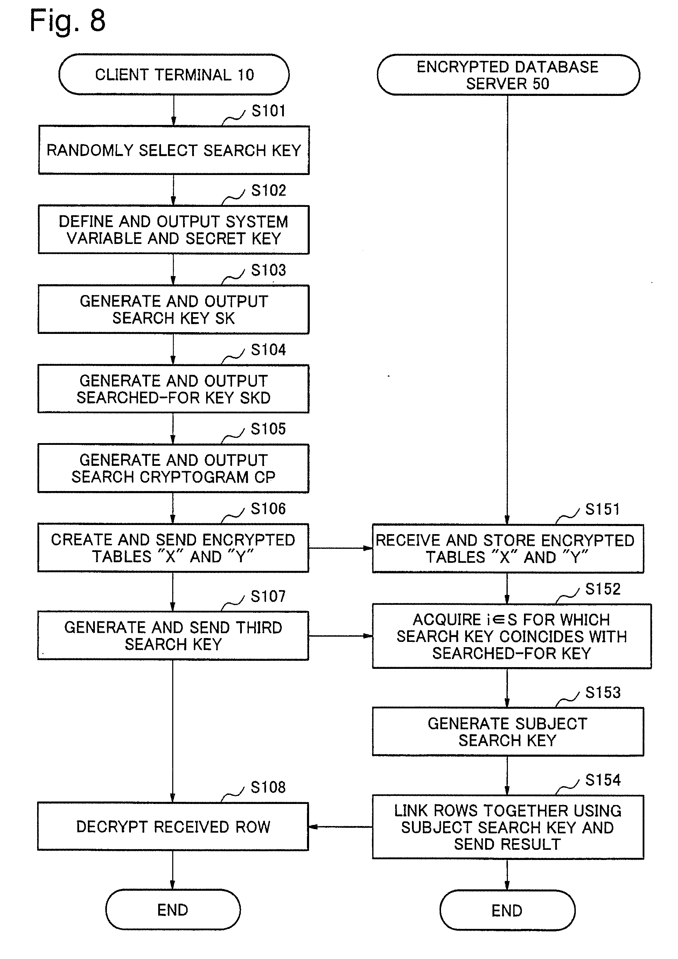

The "search key (X,A,q)" is sent from the client terminal 10 to the encrypted database server 50, along with a partial link command. The search key is expressed as a third search key 35a in Fig. 8.

In the encrypted database server 50 having received them, the search unit 61 uses the third search key 35a = search key (X,A,q) and the searched-for key 34a = searched-for key (X,A,a[i]) as input. With respect to every value from 1 to n, which i can take, the search unit 61 searches for an i value for which the search key 35a coincides with the first searched-for key 34a = searched-for key (X,A,a[i]), which is an element in the column "A" 31a of the encrypted table "X" 41. The search unit 61 finds all i values for which determination result = 0 (coincidence) is outputted. A set of such i values will be described as S. Here, if $i \in S$, then a[i] = q.

Subsequently, with respect to every i value being an element of the set S, the derivation unit 62 generates a subject search key 44a = search key (Y,C,b [i]), from the third search key 35a = search key (X,A,q) and the search cryptogram 34f = (search key (X,A,a[i]), search key (Y,C,b[i])).

Then, with respect to each and every i value being an element of the set S, the search unit 61 determines whether or not the subject search key 44a = search key (Y,C,b[i]) coincides with the second searched-for key 34d = searched-for key (Y,C,c[j]), which is an element in the column C of the encrypted table "Y" 42. The search unit 61 correlates a row number j giving determination result = 0 (coincidence) to the i value. Such j will be expressed as j[i]. The search unit 61 links the i-th row of the encrypted table "X" 41 with the j-th row of the encrypted table "Y" 42, between which coincidence has been determined to exist, and thereby creates a new row R[i]. The search unit 61 sends back R[i] with respect to each and every value of i ∈ S to the client terminal 10.

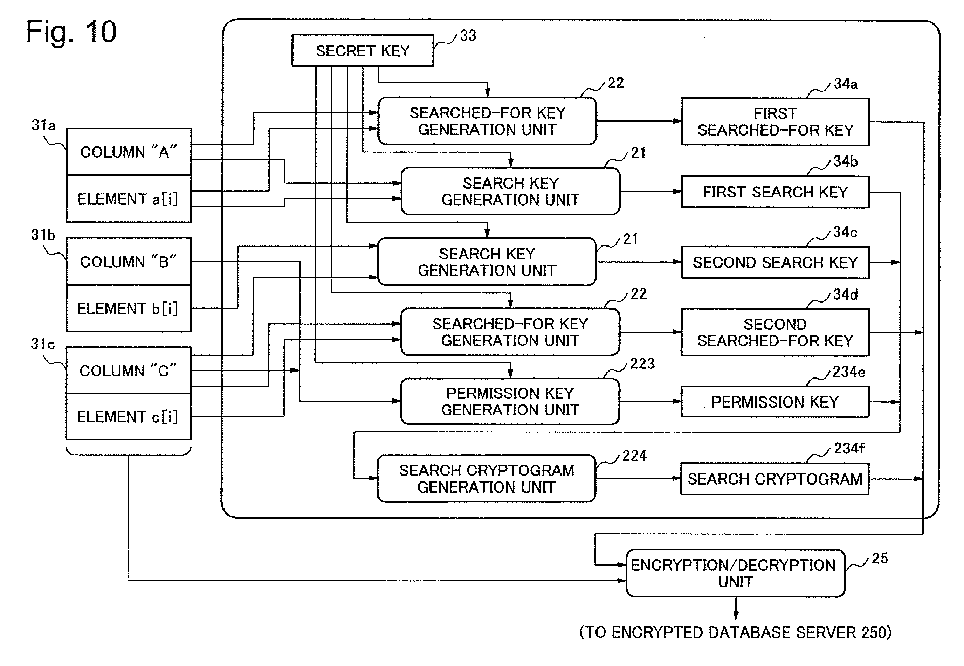

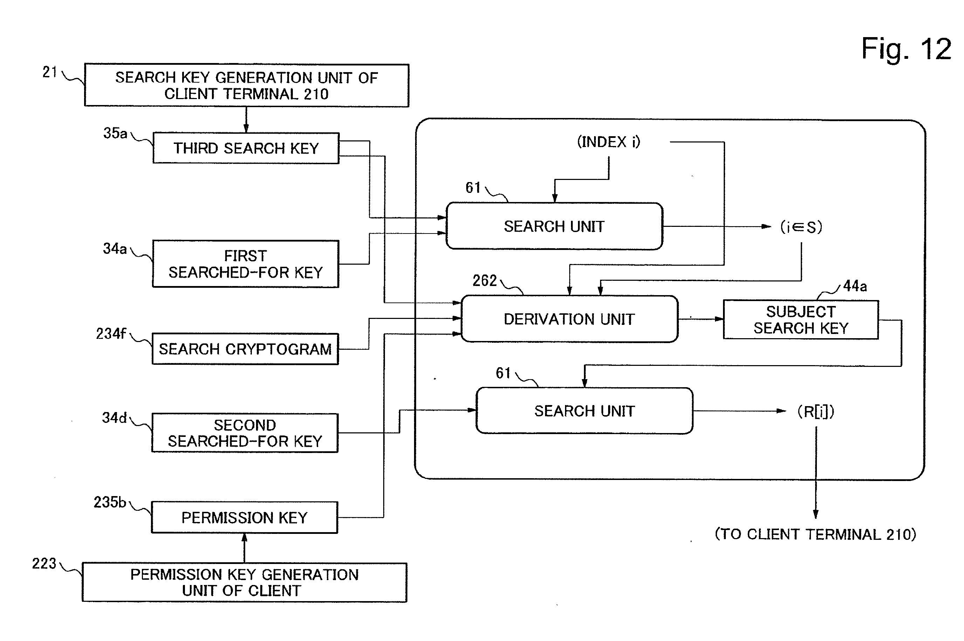

The search unit 61 is presented at two locations in Fig. 7, for the sake of avoiding complication of the diagram, similarly to in Fig. 2. Similarly to in Fig. 2, the two search units 61 represent the same constituent. This way of drawing is used also in Figs. 10 and 12 described later.

By decrypting enc(a[i]), enc(b[i]) and enc(c[i]), which are elements of R[i], by the use of the encryption/decryption unit 25, the client terminal 10 can obtain the plaintexts a[i], b[i] and c[i] for the elements in the respective columns. Further, when an appropriate search cryptogram 34f is created in advance, it is also possible to make further linking between the column "C" and still another column, using the subject search key 44a = search key (Y,C,b[i]).

(more detail description of exemplary embodiment)

Operation of each of the above-described means will be described in more detail.

Fig. 8 is a flow chart showing a process performed by the client terminal 10 and the encrypted database server 50 shown in Fig. 1. On the side of the client terminal 10, the initial setting unit 20 randomly selects a secret key MK expressed by a following equation 10 from a safety variable κ inputted via the input means 13 (step S101).

$$[\mathrm{equation}\ 10]$$

$$\mathrm{Secret\,Key}\quad MK \in \{0,1\}\kappa$$

The initial setting unit 20 further defines a system variable PM as a description of a method for expressing a hash function represented by a following equation 11, a space of table name, a space of column name and a space of column element, and outputs the system variable PM and the secret key MK (step S102).

$$[\mathrm{equation}\ 11]$$

$$\mathrm{Hash\,function}\quad Hash : \{0,1\}\kappa \times \{0,1\}^* \to \{0,1\}\kappa$$

Using, as input, the system variable PM, the secret key MK, a table name TN ("X" and "Y" in Figs. 3 and 4), a column name CN ("A", "B", and "C" in Figs. 3 and 4) and an element value EV ("a[i]", "b[i]" and "c[i]" in Figs. 3 and 4), the search key generation unit 21 generates and outputs a search key SK expressed by a following equation 12 (step S103).

$$[\mathrm{equation}\ 12]$$

$$SK = Hash\big(MK,(1,TN,CN,EV)\big)$$

Using, as input, the system variable PM, the secret key MK, a table name TN (the same as above), a column name CN (the same as above) and an element value EV (the same as above), the searched-for key generation unit 22 generates and outputs a searched-for key SKD expressed by a following equation 13 (step S104).

[equation 13]

$$SKD = Hash(MK,(2,TN,CN,EV))$$

Using, as input, the system variable PM, a first search key SK and a second search key SK', the search cryptogram generation unit 24 generates and outputs a search cryptogram CP expressed by a following equation 14 (step S105).

[equation 14]

$$CP := (CP[1],CP[2]) = (R,Hash(SK,(4,R)) \oplus SK')$$

As already described (as shown in Figs. 5 and 6), the encryption/decryption unit 25 substitutes each element in the table "X" 31 and in the table "Y" 32 and thereby creates the encrypted table "X" 41 and the encrypted table "Y" 42 (step S106). Then, the encryption/decryption unit 25 sends the encrypted table "X" 41 and the encrypted table "Y" 42 to the encrypted database server 50. Receiving these, the encrypted database server 50 stores them into the storage means 52 (step S151).

In the client terminal 10, the search key generation unit 21 subsequently generates the search key SK = the third search key 35a expressed by the equation 12, and sends it to the encrypted database server 50, along with a partial link command (step S107).

In the encrypted database server 50, using the system variable PM, the search key SK and the searched-for key SKD as input, the search unit 61 performs, with respect to every row, a process of comparing the search key SK with the searched-for key SKD, as expressed by a following equation 15, and outputting 0 if they coincide with each other and 1 if they does not. The search unit 61 acquires a set S of values of the row number i for which 0 is outputted, that is, for which the third search key SK = search key (X,A,q) coincides with the first searched-for key SKD = searched-for key (X,A,a[i]) (step S152).

[equation 15]

$$\begin{cases} \text{If } SK = SKD \text{ then Output} = 0 \\ \text{If } SK \neq SKD \text{ then Output} = 1 \end{cases}$$

With respect to each and every value of i ∈ S, the derivation unit 62 generates and outputs a subject search key SK' = search key (Y,C,b[i]) expressed by a following equation 16, using the system variable PM, the search key SK and the cryptogram CP as input (step S153).

[equation 16]

$$SK' = Hash(SK,(4,CP[1])) \oplus CP[2]$$

Then, with respect to each and every value of i ∈ S, the search unit 61 determines whether or not the subject search key SK' coincides with the second searched-for key 34d = searched-for key (Y,C,c[j]). The search unit 61 links the i-th row of the encrypted table "X" 41 with the j-th row of the encrypted table "Y" 42 between which coincidence has been determined to exist, and thereby creates a new row R[i]. The search unit 61 sends back R[i] for each and every value of i ∈ S to the client terminal 10 (step S154).

In the client terminal 10, by the encryption/decryption unit 25 decrypting R[i] by the use of the secret key 33, the table "X" 31 and the table "Y" 32 are linked with each other, and further a row having a value q in the column "A" is acquired (step S108).

(general operation of the first exemplary embodiment)

Next, general operation of the above-described exemplary embodiment will be described.

The client terminal 10 encrypts an inputted first table having data in the a-th and b-th columns and an inputted second table having data in the c-th column, by the use of a secret key stored in advance, and outputs the encrypted tables to the encrypted database server 50 (Fig. 8, steps S101 to S106). The encrypted database server 50 receives and stores the encrypted first and second tables (Fig. 8, step S151). The client terminal 10 sends a partial link command to perform linking between the encrypted first and second tables in terms of data having a value q in the a-th column of the encrypted first table, using the b-th and c-th columns as keys, to the encrypted database server 50, along with a search key generated from the secret key (Fig. 8, step S107). Using the search key, the encrypted database server 50 extracts data having the value q in the a-th column from each of the encrypted first and second tables, then links together the extracted pieces of data using the b-th and c-th columns as keys, and sends back the result to the client terminal 10 (Fig. 8, steps S152 to S154).

Here, each of the above-described operation steps may be programmed into a computer-executable program and executed by the client terminal 10 or the encrypted database server 50, which are computers to directly execute the above-described steps. Those programs may be recorded in a non-temporary recording medium, for example, a DVD, a CD, a flash memory or the like. In that case, the programs are read from the recording medium and executed by the computers.

By the above-described operation, the present exemplary embodiment exhibits the following effect.

In the present exemplary embodiment, a subject search key SK' can be derived from a search key SK, on the basis of a search cryptogram CP. That is, as was shown in the above-described example of linking, a column including a search cryptogram CP in a certain table can be used for derivation of a subject search key SK' for searching for a row in another table to which linking is to be made.

The derivation requires also a search key SK. That is, resulting from the dependence of the value of a searched-for key to be generated on the column name, it is impossible to determine whether two values included in different columns are the same or not from only the relevant searched-for key even if the two values are actually the same. Therefore, it is impossible to know to which column of which table linking is to be made, unless the search key SK is given.

When the method presented in the present exemplary embodiment is used, it is possible to obtain a table including only a necessary row resulting from partial linking, without decrypting any of the tables. Because linking is never made with respect to any unnecessary rows, the risk of the correlation being estimated also never arises. As a result, it is possible to reduce the "risk of leakage of information about data correlation" which was described above.

In the present invention, as has been described above, the database server determines and extracts data with an element value q in the first and second tables, using a search key generated from a secret key at the client terminal. Then, in terms of only such pieces of data, the database server performs linking between the first and second tables and sends back the result to the client terminal. Because of such a configuration, it never happens that the individual tables are decrypted or that data linking is performed to an extent more than necessary.

(second exemplary embodiment)

In a second exemplary embodiment of the present invention, in addition to the configuration of the first exemplary embodiment, a client terminal 210 further comprises a permission key generation unit 223 for generating a permission key, which is a key for correlating the b-th column of the first table with the c-th column of the second table, by the use of a secret key, and a search cryptogram generation unit 224 generates a search cryptogram from the first and second search keys and the permission key. Then, a derivation unit 262 of an encrypted database server 250 generates a subject search key from the first search key, the search cryptogram and the permission key.

With this configuration, in addition to that the same effect as that of the first exemplary embodiment can be achieved, it is possible to prevent data correlation between more than two tables from being discovered one after another and to enable an administrator to appropriately set a possible range of data linking.

It will be described in more detail below.

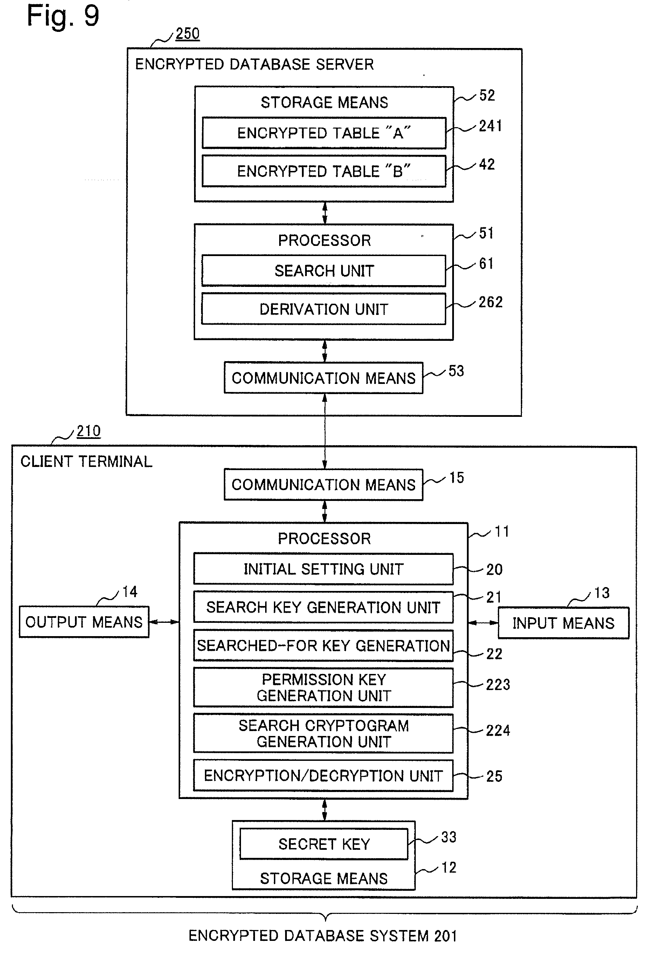

Fig. 9 is an explanatory diagram showing a configuration of an encrypted database system 201 according to the second exemplary embodiment of the present invention. In the encrypted database system 201, the client terminal 10 and the encrypted database server 50, in the encrypted database system 1 of the above-described first exemplary embodiment, are replaced by, respectively, a different client terminal 210 and a different encrypted database server 250.

In the hardware aspect, the client terminal 210 includes the same constituents as that of the client terminal 10 in the first exemplary embodiment. Also in the software aspect, the constituents are the same as that in the first exemplary embodiment except that the permission key generation unit 223 is added to the functional units operating in the processor 11 and that the search cryptogram generation unit 24 is replaced by a different search cryptogram generation unit 224.

The encrypted database server 250 on the other side also includes, in the hardware aspect, the same constituents as that of the encrypted database server 50 in the first exemplary embodiment. Also in the software aspect, the constituents are the same as that in the first exemplary embodiment except that the derivation unit 62 operating in the processor 51 is replaced by a different derivation unit 262. Accordingly, each of the same constituents as that in the first exemplary embodiment will be given the same name and reference sign as that in the first exemplary embodiment, and the following description will be given of only the different points.

On the side of the client terminal 210, the permission key generation unit 223 generates, with respect to the column "A" of the table "X" 31 and the column "B" of the table "Y" 32, a "permission key ((X,A)→ (Y,B))" which is information to permit deriving, from a specific element in the column "A" of the table "X" 31, a specific element in the column "B" of the table "Y" 32 related to the element in the column "A", using the secret key. If considered to be a function, the permission key generation unit 223 is expressed as a following equation 17.

[equation 17]

$$\text{Secret key} \times \text{Table name } X \times \text{Column name } A \times \text{Table name } Y \times \text{Column name } B$$
$$\rightarrow \text{Permission key}$$

The search cryptogram generation unit 224 generates a "search cryptogram (K1,K2,P)" to be used in a case of requiring a permission key "P" in addition to the two search keys "K1" and "K2", using the secret key. If considered to be a function, the search cryptogram generation unit 224 is expressed as a following equation 18.

[equation 18]

$$\text{Secret key} \times \text{First search key} \times \text{Second search key} \times \text{Permission key} \rightarrow \text{Search cryptogram}$$

On the side of the encrypted database server 250, with respect to the search key "K1 = search key (X,A,a)" related to the column "A" of the table "X" 31 and an element "a" in the column "A", the search key "K2 = search key (Y, B,b)" related to the column "B" of the table "Y" 32 and an element "b" in the column "B", whose existence is assumed, and the permission key "P", the derivation unit 262 derives a subject search key "K2" from the search key "K1" and a "search cryptogram (K1,K2,P)". If considered to be a function, the derivation unit 262 is expressed as a following equation 19.

[equation 19]

$$\text{Search key} \times \text{Search cryptogram} \times \text{Permission key} \rightarrow \text{Subject search key}$$

(creation and sending of encrypted tables)

Fig. 10 is an explanatory diagram illustrating operation, performed by the client terminal 210 shown in Fig. 9, of encrypting the table "X" 31 and the table "Y" 32 shown in Figs. 3 and 4 and sending the encrypted tables to the encrypted database server 250.

In Fig. 10, similarly to in Fig. 2, the search key generation units 21 and the searched-for key generation unit 22 are each presented at two locations, for the sake of avoiding complication of the diagram. Similarly to in Fig. 2, the two search key generation units 21 represent the same constituent, and also do the two searched-for key generation units 22.

From the table "X" 31, the column "B" 31b, the table "Y" 32, the column "C" 32c and the secret key 33, the permission key generation unit 223 generates a "permission key ((X,B)→ (Y,C))" expressed by the equation 17. It is expressed as a permission key 234e in Fig. 10.

With respect to each and every value from 1 to n, which i can take, the search cryptogram generation unit 224 generates a "search cryptogram (first search key, second search key, permission key)" expressed by the equation 18, from the first search key 34b, the second search key 34c, the permission key 234e and the secret key 33. It is expressed as a search cryptogram 234f in Fig. 10. Here, on the side of the client terminal 10, a user can optionally designate whether to include the permission key in the search cryptogram 234f or not, that is, the necessity of the permission key.

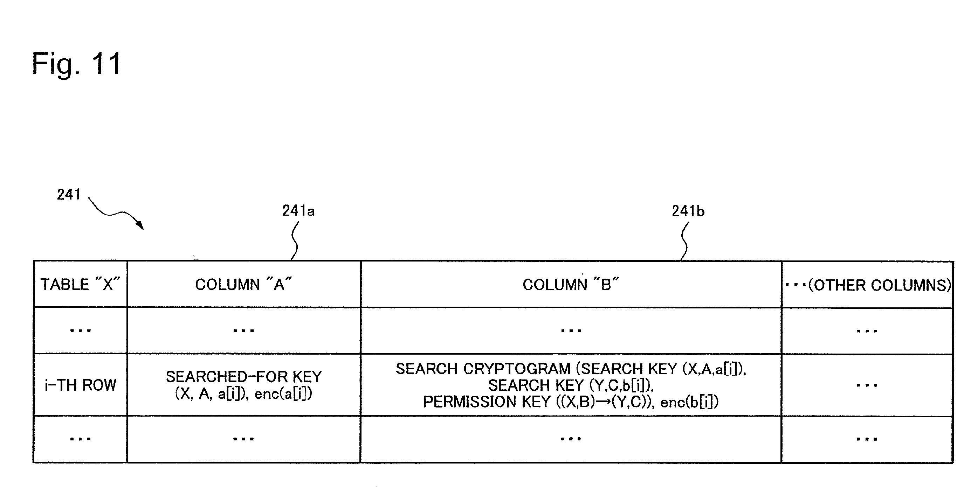

Fig. 11 is an explanatory diagram showing an encrypted table "X" 241 resulting from substitution performed by the encryption/decryption unit 25 shown in Fig. 10. By the same process as that in the first exemplary embodiment, the encryption/decryption unit 25 substitutes an element "a[i]" in the column "A" 31a of the table "X" 31 with (first searched-for key, enc(a[i])), and similarly an element "b[i]" in the column "B" 31b with (search cryptogram (first search key, second search key, permission key), enc(b[i])), thereby creating the encrypted table "X" 241. The process of creating the encrypted table "Y" 42 by substituting the elements in the table "Y" 32, performed by the encryption/decryption unit 25, is completely the same as that in the first exemplary embodiment.

The encrypted database server 250 stores the encrypted table "X" 241 and the encrypted table "Y" 42, which are received from the client terminal 210, into the storage means 52. Then, receiving a command from the client terminal 10, the encrypted database server 250 performs a linking process on the encrypted table "X" 241 and the encrypted table "Y" 42, and sends back a result of the process to the client terminal 10 having made a request for it. This process will be described below.

(linking process on encrypted tables)

Here, it is considered that, similarly to in the first exemplary embodiment, linking is performed in terms of data whose element "b[i]" in the column "B" and element "c[i]" in the column "C", in the encrypted table "X" 241 and the encrypted table "Y" 42, have the same value.

The client terminal 10 holds the secret key 33 which was used when the encryption was performed to create the encrypted table "X" 241 and the encrypted table "Y" 42, but the encrypted database server 250 does not hold it. The encrypted database server 250 performs a process of making linking between these encrypted tables and then extracting a row having a value q in the column "A" 31 a, without decrypting the tables.

Fig. 12 is an explanatory diagram showing a process, performed by the encrypted database server 250 shown in Fig. 9, of linking the encrypted table "X" 241 shown in Fig, 11 with the encrypted table "Y" 42 shown in Fig. 6 and extracting a row having a value q in the column "A" 31a. First, the search key generation unit 21 of the client terminal 210 generates a "search key (X,A,a[i])" expressed by the equation 3, similarly to in the first exemplary embodiment.

Then, the permission key generation unit 223 generates a "permission key ((X,B)$\to$ (Y,C))" expressed by the equation 17, from the table "X" 31, the column "B" 31b, the table "Y" 32, the column "C" 32c and the secret key 33.

The above-described "search key (X,A,a[i])" and "permission key ((X,B)$\to$ (Y,C))" are sent, along with a partial link command, from the client terminal 210 to the encrypted database server 250. In Fig. 12, they are expressed as a search key 35a and a permission key 235b, respectively.

In the encrypted database server 250 having received them, the search unit 61 uses, as input, the search key 35a = search key (X,A,a[i]) and the searched-for key 34a = searched-for key (X,A,a[i]), similarly to in the first exemplary embodiment. With respect to each and every value from 1 to n, which i can take, the search unit 61 searches for an i value for which the search key 35a coincides with the first searched-for key 34a = searched-for key (X,A,a[i]), which is the element in the column "A" 31a of the encrypted table "X" 41. The search unit 61 finds all i values for which determination result = 0 (coincidence) is outputted. A set of such i values will be described as S. Here, if i $\in$ S, then a[i] = q.

Subsequently, with respect to each and every i value being an element of the set S, the derivation unit 262 generates a third search key 44a = search key (Y,C,b[i]) expressed by the equation 7, from the search key 35a = (X,A, q), the search cryptogram 34f = (search key (X,A,a[i]), search key (Y,C,b[i])), the permission key ((X,B)$\to$ (Y,C)) and the permission key 35b = permission key ((X,B)$\to$ (Y,C)).

Then, with respect to each and every i value being an element of the set S, the search unit 61 determines whether or not the third search key 44a = search key (Y,C,b[i]) coincides with the second searched-for key 34d = searched-for key (Y,C,c[j]), which is an element in the column C of the encrypted table "Y" 42. The search unit 61 correlates a value of the row number j giving determination result = 0 (coincidence) to the i value. Such j will be expressed as j[i]. The search unit 61 links the i-th row of the encrypted table "X" 41 with the j-th row of the encrypted table "Y" 42, between which coincidence has been determined to exist, and thereby creates a new row R[i]. The search unit 61 sends back R[i] with respect to each and every value of i $\in$ S to the client terminal 10.

The search unit 61 is presented at two locations in Fig. 12, similarly to in Fig. 7, for the sake of avoiding complication of the diagram. Similarly to in Fig. 7, the two search units 61 represent the same constituent.

By decrypting enc(a[i]), enc(b[i]) and enc(c[i]), which are elements of R[i], by the use of the encryption/decryption unit 25, the client terminal 10 can obtain the plaintexts a[i], b[i] and c[i] for the elements in the respective columns. Further, when an appropriate search cryptogram 34f is created in advance, it is also possible to make further linking between the column "C" and still another column, using the third search key 44a = search key (Y,C,b[i]).

(more detailed description of exemplary embodiment)

Operation of each of the above-described means will be described in more detail.

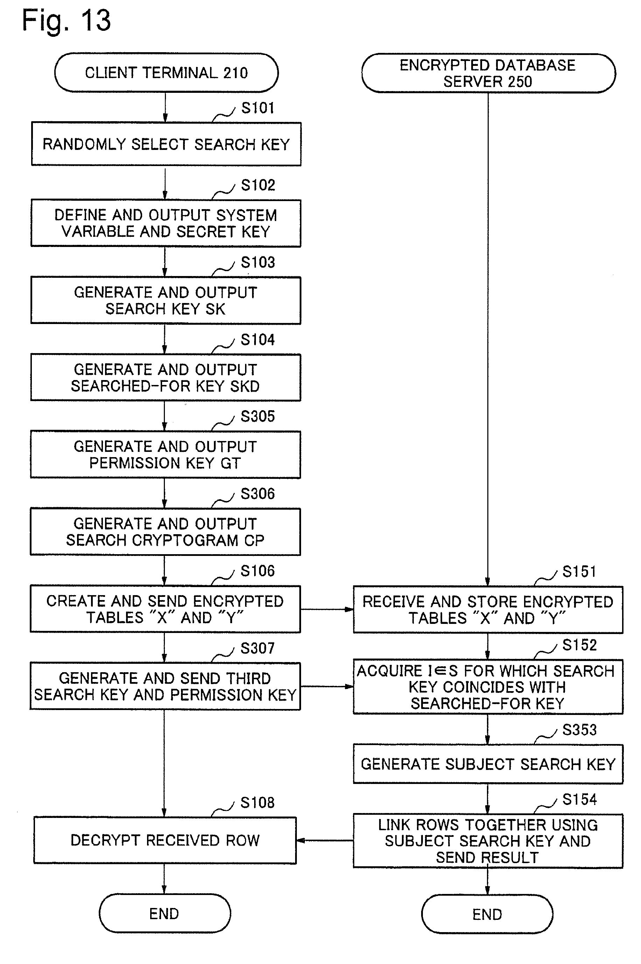

Fig. 13 is a flow chart showing a process performed by the client terminal 210 and the encrypted database server 250 shown in Fig. 9. Operations in the steps S101 to S104 are the same as that in the first exemplary embodiment shown in Fig. 8.

Subsequently to the steps S101 to S104, the permission key generation unit 223 generates and outputs a permission key GT expressed by a following equation 20, using, as input, the system variable PM, the secret key MK, the name TN of the first table and the name CN of a column of the table, and the name TN' of the second table and the name CN' of a column of the table (step S305).

[equation 20]

$$GT = Hash\big(MK, (3, TN, CN, TN', CN')\big)$$

Using the system variable PM, the first search key SK, the second search key SK' and the permission key GT as input, the search cryptogram generation unit 224 generates and outputs a search cryptogram CP expressed by a following equation 21 (step S306).

[equation 21]

$$CP := (CP[1], CP[2]) = \big(R, Hash(SK, (4, GT, R)) \oplus SK'\big)$$

As already described (as shown in Figs. 6 and 11), the encryption/decryption unit 25 substitutes each element in the table "X" 31 and in the table "Y" 32, thereby creating the encrypted table "X" 241 and the encrypted table "Y" 42 (step S106). Then, the encryption/decryption unit 25 sends the encrypted table "X" 241 and the encrypted table "Y" 42 to the encrypted database server 250.

In the process performed on the side of the encrypted database server 250, operations in the steps S151 to S 153 are the same as that in the first exemplary embodiment shown in Fig. 8. Subsequently, in the client terminal 210, the search key generation unit 21 generates a search key SK = the third search key 35a expressed by the equation 12, similarly to in the step S107, and further, the permission key generation unit 223 newly generates a permission key, and thus created keys are sent, along with a partial link command, to the encrypted database server 250 (step S307).

In the encrypted database server 250 having received them, by the same operation as that in the step S 152, the search unit 61 acquires a set S of values of the row number i for which the third search key SK = search key (X,A, q) coincides with the first searched-for key SKD = searched-for key (X,A,a[i]). Then, with respect to each and every value of $i \in S$, the derivation unit 262 generates and outputs a subject search key SK' expressed by a following equation 22, using the system variable PM, the search key SK, the cryptogram CP and the permission key GT as input (step S353).

[equation 22]

$$SK' = Hash\big(SK, (4, GT, CP[1])\big) \oplus CP[2]$$

The subsequent operations are the same as that in the steps S 154 and S108.

(specific meaning of permission key GT)

A more specific meaning of the above-described permission key GT will be described below.

Considered here is an example where three tables named "I", "II" and "III" exist, and rows named "A", "B" and "C" exist in the respective tables. There is a search cryptogram CP which determines a linking partner with respect to between the row "A" of the table "I" and the row "B" of the table "II". There is also a search cryptogram CP' which determines a linking partner with respect to between the row "B" of the table "II" and the row "C" of the table "III". The search cryptogram CP does not need a permission key from the row "A" to the row "B", and similarly, the search cryptogram CP' does not need a permission key from the row "B" to the row "C".

Here, it is assumed that a search key SK for searching for an element in the row "A" of the table "I" is given. Then, by this search key SK, correlation from the row "A" of the table "I" to the row "B" of the table "II" is discovered, and at that moment, a search key SK' for the correlated row is derived. Combining the search key SK' with the search cryptogram CP', this time, correlation from the row "B" of the table "II" to the row "C" of the table "III" is discovered.

Thus, when no permission key is set, there is a risk of correlation within data being discovered one after another. This is against the intention of the creator or an administrator of the data when he/she hopes for linking between the table "I" and the table "II" but not for linking between the table "II" and the table "III".

To prevent that, it is better to set a permission key from the row "B" to the row "C" by means of a search cryptogram CP'. That is, using the permission key, it is possible for the creator or an administrator of the data to appropriately set a range within which he/she does or does not want to permit data linking.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

Although a part or all of the exemplary embodiments mentioned above can also be described as the following supplementary notes, they are not limited to the followings.

(Supplementary note 1)

An encrypted database system including:

a client terminal which encrypts an inputted first table having data in a-th and b-th columns and an inputted second table having data in c-th column by the use of a secret key stored in advance and outputs the encrypted first and second tables to an encrypted database server, and sends a partial link command to perform linking between the encrypted first and second tables in terms of data having a value q in the a-th column using the b-th and c-th columns as keys, to the encrypted database server, along with a search key generated from the secret key; and
the encrypted database server which receives and stores the encrypted first and second tables, performs linking between the encrypted first and second tables in terms of data having a value q in the a-th column using the b-th and c-th columns as keys, in response to the partial link command, and sends back a result of the linking to the client terminal, wherein
the encrypted database server extracts data having a value q in the a-th column from each of the encrypted first and second tables by the use of the secret key, and performs linking together the extracted pieces of data using the b-th and c-th columns as keys.

(Supplementary note 2)

The encrypted database system according to Supplementary note 1, wherein the client terminal includes:

a search key generation means for generating, by the use of the secret key, a first search key which is a key for searching for an element in the a-th column of the first table and a second search key which is a key for searching for an element in the b-th column of the first table;
a searched-for key generation means for generating, by the use of the secret key, a first searched-for key which is a key for being searched for an element having a specific value in the a-th column of the first table and a second searched-for key which is a key for being searched for an element having a specific value in the c-th column of the second table;
an encryption means for encrypting each element in the first and second tables by the use of the secret key; and
a search cryptogram generation means for substituting, in the first table, an element in the a-th column with the first searched-for key and with the element in the a-th column after encryption, and an element in the b-th column with a search cryptogram generated from the first and second search keys and with the element in the b-th column after encryption, substituting, in the second table, an element in the c-th column with the second searched-for key and with the element in the c-th column after encryption, and sending the first and second tables after the substitution as the encrypted first and second tables to the encrypted database server, wherein
the search key generation means generates a third search key which is a key for searching for an element having a value q in the a-th column of the first table by the use of the secret key, and sends the third search key to the encrypted database server along with the partial link command.

(Supplementary note 3)

The encrypted database system according to Supplementary note 2, wherein the encrypted database server includes:

a search means for extracting a row in the first table for which the third search key coincides with the first searched-for key; and

a derivation means for generating a subject search key from the first search key and the search cryptogram, wherein the search means determines, with respect to the extracted row, whether an element in the b-th column of the encrypted first table and an element c-th column in the encrypted second table have the same value by the use of the generated subject search key, and performs the linking.

(Supplementary note 4)

The encrypted database system according to Supplementary note 3, wherein the client terminal further includes a permission key generation means for generating a permission key which is a key for correlating the b-th column of the first table with the c-th column of the second table, by the use of the secret key, the search cryptogram generation means generates the search cryptogram from the first and second search keys and the permission key, and the derivation means of the encrypted database server generates the subject search key from the first search key, the search cryptogram and the permission key.

(Supplementary note 5)

A client terminal including:

an encryption means for encrypting an inputted first table having data in a-th and b-th columns and an inputted second table having data in c-th column by the use of a secret key stored in advance and outputting the encrypted first and second tables to an encrypted database server; and

a search key generation means for generating a search key by the use of the secret key, wherein the search key generation means sends a partial link command to perform linking between the encrypted first and second tables in terms of data having a value q in the a-th column using the b-th and c-th columns as keys, to the encrypted database server, along with the search key.

(Supplementary note 6)

The client terminal according to Supplementary note 5, wherein the search key generation means generates, by the use of the secret key, a first search key which is a key for searching for an element in the a-th column of the first table and a second search key which is a key for searching for an element in the b-th column of the first table, and further including:

a searched-for key generation means for generating, by the use of the secret key, a first searched-for key which is a key for being searched for an element having a specific value in the a-th column of the first table and a second searched-for key which is a key for being searched for an element having a specific value in the c-th column of the second table; and

a search cryptogram generation means for substituting, in the first table, an element in the a-th column with the first searched-for key and with the element in the a-th column after encryption, and an element in the b-th column with a search cryptogram generated from the first and second search keys and with the element in the b-th column after encryption, substituting, in the second table, an element in the c-th column with the second searched-for key and with the element in the c-th column after encryption, and sending the first and second tables after the substitution as the encrypted first and second tables to the encrypted database server.

(Supplementary note 7)

An encrypted database server including a search means for receiving an encrypted first table having data in a-th and b-th columns and an encrypted second table having data in c-th column from a client terminal, storing the encrypted first and second tables, performing linking between the encrypted first and second tables in terms of data having a value q in the a-th column using the b-th and c-th columns as keys, in response to a partial link command including a search key received from the client terminal, and outputting a result of the linking to the client terminal, wherein the search means extracts data having a value q in the a-th column from each of the encrypted first and second tables, and performs linking together the extracted pieces of data using the b-th and c-th columns as keys by the use of the secret key.

(Supplementary note 8)

The encrypted database server according to Supplementary note 7 further including a derivation means for generating a subject search key from the search key and a search cryptogram included in the encrypted first table, wherein the search means extracts a row in the encrypted first table for which the search key coincides with a first searched-for key, determines, with respect to the extracted row, whether an element in the b-th column of the encrypted first table and an element c-th column in the encrypted second table have the same value by the use of the subject search key, and performs the linking.

(Supplementary note 9)

An encrypted data linking method, in an encrypted database system including a client terminal and an encrypted database server, including:

in the client terminal, encrypting an inputted first table having data in a-th and b-th columns and an inputted second table having data in c-th column by the use of a secret key stored in advance, and outputting the encrypted first and second tables to the encrypted database server;
in the encrypted database server, receiving and storing the encrypted first and second tables;
in the client terminal, sending a partial link command to perform linking between the encrypted first and second tables in terms of data having a value q in the a-th column using the b-th and c-th columns as keys, to the encrypted database server, along with a search key generated from the secret key; and
in the encrypted database server, extracting data having a value q in the a-th column from each of the encrypted first and second tables by the use of the secret key, performing linking together the extracted pieces of data using the b-th and c-th columns as keys, and sending back a result of the linking to the client terminal.

(Supplementary note 10)

The encrypted data linking method according to Supplementary note 9, wherein
in a search key generation means of the client terminal, generating, by the use of the secret key, a first search key which is a key for searching for an element in the a-th column of the first table and a second search key which is a key for searching for an element in the b-th column of the first table;
in a searched-for key generation means of the client terminal, generating, by the use of the secret key, a first searched-for key which is a key for being searched for an element having a specific value in the a-th column of the first table and a second searched-for key which is a key for being searched for an element having a specific value in the c-th column of the second table;
in an encryption means of the client terminal, encrypting each element in the first and second tables by the use of the secret key;
in a search cryptogram generation means of the client terminal, substituting, in the first table, an element in the a-th column with the first searched-for key and with the element in the a-th column after encryption, and an element in the b-th column with a search cryptogram generated from the first and second search keys and with the element in the b-th column after encryption, substituting, in the second table, an element in the c-th column with the second searched-for key and with the element in the c-th column after encryption, and sending the first and second tables after the substitution as the encrypted first and second tables to the encrypted database server, and
in the search key generation means of the client terminal, generating a third search key which is a key for searching for an element having a value q in the a-th column of the first table by the use of the secret key, and sending the third search key to the encrypted database server along with the partial link command.

(Supplementary note 11)

The encrypted data linking method according to Supplementary note 10, wherein
in a search means of the encrypted database server, extracting a row in the encrypted first table for which the third search key coincides with the first searched-for key;

in a derivation means of the encrypted database server, generating a subject search key from the first search key and the search cryptogram, and

in the search means of the encrypted database server, determining, with respect to the extracted row, whether an element in the b-th column of the encrypted first table and an element c-th column in the encrypted second table have the same value by the use of the generated subject search key, and performing the linking.

(Supplementary note 12)

An encrypted data linking program for an encrypted database system including a client terminal and an encrypted database server, causing a computer in the client terminal to execute steps including:

encrypting an inputted first table having data in a-th and b-th columns and an inputted second table having data in c-th column by the use of a secret key stored in advance and outputting the encrypted first and second tables to the encrypted database server; and

sending a partial link command to perform linking between the encrypted first and second tables in terms of data having a value q in the a-th column using the b-th and c-th columns as keys, to the encrypted database server, along with a search key generated from the secret key.

(Supplementary note 13)

The encrypted data linking program according to Supplementary note 12 causing the computer in the client terminal to execute steps including:

generating, by the use of the secret key, a first search key which is a key for searching for an element in the a-th column of the first table and a second search key which is a key for searching for an element in the b-th column of the first table;

generating, by the use of the secret key, a first searched-for key which is a key for being searched for an element having a specific value in the a-th column of the first table and a second searched-for key which is a key for being searched for an element having a specific value in the c-th column of the second table;

encrypting each element in the first and second tables by the use of the secret key;

substituting, in the first table, an element in the a-th column with the first searched-for key and with the element in the a-th column after encryption, and an element in the b-th column with a search cryptogram generated from the first and second search keys and with the element in the b-th column after encryption, substituting, in the second table, an element in the c-th column with the second searched-for key and with the element in the c-th column after encryption, and sending the first and second tables after the substitution as the encrypted first and second tables to the encrypted database server, and

generating a third search key which is a key for searching for an element having a value q in the a-th column of the first table by the use of the secret key, and sending the third search key to the encrypted database server along with the partial link command.

(Supplementary note 14)

An encrypted data linking program for an encrypted database system including a client terminal and an encrypted database server, causing a computer in the encrypted database server to execute steps including:

receiving an encrypted first table having data in a-th and b-th columns and an encrypted second table having data in c-th column from a client terminal, and storing the encrypted first and second tables; and

in response to a partial link command including a search key received from the client terminal, extracting data having a value q in the a-th column from each of the encrypted first and second tables by the use of the secret key, performing linking together the extracted pieces of data using the b-th and c-th columns as keys, and sending back a result of the linking to the client terminal.

(Supplementary note 15)

The encrypted data linking program according to Supplementary note 14, causing the computer in the encrypted database server to execute steps including:

extracting a row in the encrypted first table for which the third search key coincides with the first searched-for key;

generating a subject search key from the first search key and the search cryptogram, and
determining, with respect to the extracted row, whether an element in the b-th column of the encrypted first table and an element c-th column in the encrypted second table have the same value by the use of the generated subject search key, and performing the linking.

This application is based upon and claims the benefit of priority from Japanese Patent Application No. 2012-078222, filed on March 29, 2012, the disclosure of which is incorporated herein in its entirety by reference.

[Industrial Applicability]

The present invention is available in an encrypted database system. In particular, a remarkable effect is achieved in an encrypted database system to contain a great amount of security data.

**[Reference Signs List]**

| 1, 201 | encrypted database system |
|---|---|
| 10, 210 | client terminal |
| 11, 51 | processor |
| 12, 52 | storage means |
| 13 | input means |
| 14 | output means |
| 15, 53 | communication means |
| 20 | initial setting unit |
| 21 | search key generation unit |
| 22 | searched-for key generation unit |
| 24, 224 | search cryptogram generation unit |
| 25 | encryption/decryption unit |
| 33 | secret key |
| 34a | first searched-for key |
| 34b | first search key |
| 34c | second search key |
| 34d | second searched-for key |
| 34f | search cryptogram |
| 35a | third search key |
| 44a | subject search key |
| 50, 250 | encrypted database server |
| 61 | search unit |
| 62, 262 | derivation unit |
| 223 | permission key generation unit |
| 234e, 235b | permission key |

**Claims**

1. An encrypted database system comprising:

a client terminal which encrypts an inputted first table having data in a-th and b-th columns and an inputted second table having data in c-th column by the use of a secret key stored in advance and outputs the encrypted first and second tables to an encrypted database server, and sends a partial link command to perform linking between the encrypted first and second tables in terms of data having a value q in the a-th column using the b-th and c-th columns as keys, to the encrypted database server, along with a search key generated from the secret key; and
the encrypted database server which receives and stores the encrypted first and second tables, performs linking between the encrypted first and second tables in terms of data having a value q in the a-th column using the b-th and c-th columns as keys, in response to the partial link command, and sends back a result of the linking to the client terminal, wherein

the encrypted database server extracts data having a value q in the a-th column from each of the encrypted first and second tables by the use of the secret key, and performs linking together the extracted pieces of data using the b-th and c-th columns as keys.

2. The encrypted database system according to claim 1, wherein
the client terminal comprises:

a search key generation means for generating, by the use of the secret key, a first search key which is a key for searching for an element in the a-th column of the first table and a second search key which is a key for searching for an element in the b-th column of the first table;
a searched-for key generation means for generating, by the use of the secret key, a first searched-for key which is a key for being searched for an element having a specific value in the a-th column of the first table and a second searched-for key which is a key for being searched for an element having a specific value in the c-th column of the second table;
an encryption means for encrypting each element in the first and second tables by the use of the secret key; and
a search cryptogram generation means for substituting, in the first table, an element in the a-th column with the first searched-for key and with the element in the a-th column after encryption, and an element in the b-th column with a search cryptogram generated from the first and second search keys and with the element in the b-th column after encryption, substituting, in the second table, an element in the c-th column with the second searched-for key and with the element in the c-th column after encryption, and sending the first and second tables after the substitution as the encrypted first and second tables to the encrypted database server, wherein
the search key generation means generates a third search key which is a key for searching for an element having a value q in the a-th column of the first table by the use of the secret key, and sends the third search key to the encrypted database server along with the partial link command.

3. The encrypted database system according to claim 2, wherein
the encrypted database server comprises:

a search means for extracting a row in the encrypted first table for which the third search key coincides with the first searched-for key; and
a derivation means for generating a subject search key from the first search key and the search cryptogram, wherein
the search means determines, with respect to the extracted row, whether an element in the b-th column of the encrypted first table and an element c-th column in the encrypted second table have the same value by the use of the generated subject search key, and performs the linking.

4. The encrypted database system according to claim 3, wherein
the client terminal further comprises a permission key generation means for generating a permission key which is a key for correlating the b-th column of the first table with the c-th column of the second table, by the use of the secret key,
the search cryptogram generation means generates the search cryptogram from the first and second search keys and the permission key, and
the derivation means of the encrypted database server generates the subject search key from the first search key, the search cryptogram and the permission key.

5. A client terminal comprising:

an encryption means for encrypting an inputted first table having data in a-th and b-th columns and an inputted second table having data in c-th column by the use of a secret key stored in advance and outputting the encrypted first and second tables to an encrypted database server; and
a search key generation means for generating a search key by the use of the secret key, wherein
the search key generation means sends a partial link command to perform linking between the encrypted first and second tables in terms of data having a value q in the a-th column using the b-th and c-th columns as keys, to the encrypted database server, along with the search key.

6. An encrypted database server comprising a search means for receiving an encrypted first table having data in a-th and b-th columns and an encrypted second table having data in c-th column from a client terminal, storing the encrypted first and second tables, performing linking between the encrypted first and second tables in terms of data having a value q in the a-th column using the b-th and c-th columns as keys, in response to a partial link command including a search key received from the client terminal, and outputting a result of the linking to the client terminal, wherein

the search means extracts data having a value q in the a-th column from each of the encrypted first and second tables, and performs linking together the extracted pieces of data using the b-th and c-th columns as keys by the use of the secret key.

7. An encrypted data linking method, in an encrypted database system including a client terminal and an encrypted database server, comprising:

in the client terminal, encrypting an inputted first table having data in a-th and b-th columns and an inputted second table having data in c-th column by the use of a secret key stored in advance, and outputting the encrypted first and second tables to the encrypted database server;

in the encrypted database server, receiving and storing the encrypted first and second tables;

in the client terminal, sending a partial link command to perform linking between the encrypted first and second tables in terms of data having a value q in the a-th column using the b-th and c-th columns as keys, to the encrypted database server, along with a search key generated from the secret key; and

in the encrypted database server, extracting data having a value q in the a-th column from each of the encrypted first and second tables by the use of the secret key, performing linking together the extracted pieces of data using the b-th and c-th columns as keys, and sending back a result of the linking to the client terminal.

8. A computer readable storage medium recording thereon an encrypted data linking program for an encrypted database system including a client terminal and an encrypted database server, causing a computer in the client terminal to execute steps comprising:

encrypting an inputted first table having data in a-th and b-th columns and an inputted second table having data in c-th column by the use of a secret key stored in advance and outputting the encrypted first and second tables to the encrypted database server; and

sending a partial link command to perform linking between the encrypted first and second tables in terms of data having a value q in the a-th column using the b-th and c-th columns as keys, to the encrypted database server, along with a search key generated from the secret key.

9. A computer readable storage medium recording thereon an encrypted data linking program for an encrypted database system including a client terminal and an encrypted database server, causing a computer in the encrypted database server to execute steps comprising:

receiving an encrypted first table having data in a-th and b-th columns and an encrypted second table having data in c-th column from a client terminal, and storing the encrypted first and second tables; and

in response to a partial link command including a search key received from the client terminal, extracting data having a value q in the a-th column from each of the encrypted first and second tables by the use of the secret key, performing linking together the extracted pieces of data using the b-th and c-th columns as keys, and sending back a result of the linking to the client terminal.

# Fig. 1

**50**

**ENCRYPTED DATABASE SERVER**

**STORAGE MEANS** — 52

**ENCRYPTED TABLE "A"** — 41

**ENCRYPTED TABLE "B"** — 42

**PROCESSOR** — 51

**SEARCH UNIT** — 61

**DERIVATION UNIT** — 62

**COMMUNICATION MEANS** — 53

**10**

**CLIENT TERMINAL**

**COMMUNICATION MEAN** — 15

**PROCESSOR** — 11

**INITIAL SETTING UNIT** — 20

**OUTPUT MEANS** — 14

**SEARCH KEY GENERATION UNIT** — 21

**INPUT MEANS** — 13

**SEARCHED-FOR KEY GENERATION UNIT** — 22

**SEARCH CRYPTOGRAM GENERATION UNIT** — 24

**ENCRYPTION/DECRYPTION UNIT** — 25

**SECRET KEY** — 33

**STORAGE MEANS** — 12

**ENCRYPTED DATABASE SYSTEM 1**

# Fig. 2

```
SECRET KEY  /33

COLUMN "A"  31a
ELEMENT a[i]

COLUMN "B"  31b
ELEMENT b[i]

COLUMN "C"  31c
ELEMENT c[i]

SEARCHED-FOR KEY
GENERATION UNIT  /22   →  FIRST SEARCHED-FOR KEY  /34a

SEARCH KEY
GENERATION UNIT  /21   →  FIRST SEARCH KEY  /34b

SEARCH KEY
GENERATION UNIT  /21   →  SECOND SEARCH KEY  /34c

SEARCHED-FOR KEY
GENERATION UNIT  /22   →  SECOND SEARCHED-FOR KEY  /34d

SEARCH CRYPTOGRAM
GENERATION UNIT  /24   →  SEARCH CRYPTOGRAM  /34f

ENCRYPTION/DECRYPTION
UNIT  /25
```

(TO ENCRYPTED DATABASE SERVER 50)

EP 2 833 274 A1

# Fig. 3

31 → 31a 31b

| TABLE "X" | COLUMN "A" | COLUMN "B" | ···(OTHER COLUMNS) |
|---|---|---|---|
| ... | ... | ... | ... |
| i-TH ROW | a[i] | b[i] | ... |
| ... | ... | ... | ... |

# Fig. 4

32 → 32c

| TABLE "X" | COLUMN "C" | ···(OTHER COLUMNS) |
|---|---|---|
| ... | ... | ... |
| i-TH ROW | c[i] | ... |
| ... | ... | ... |

## Fig. 5

| TABLE "X" | COLUMN "A" | COLUMN "B" | ···(OTHER COLUMNS) |
|---|---|---|---|
| ··· | ··· | ··· | ··· |
| i-TH ROW | SEARCHED-FOR KEY (X,A,a[i]),enc(a[i]) | SEARCH CRYPTOGRAM(SEARCH KEY(X,A,a[i]), SEARCH KEY(Y,C,b[i]),enc(b[i]) | ··· |
| ··· | ··· | ··· | ··· |

EP 2 833 274 A1

Fig.6

42

42c

| TABLE "Y" | COLUMN "C" | ···(OTHER COLUMNS) |
|---|---|---|
| ··· | ··· | ··· |
| i-TH ROW | SEARCHED-FOR KEY(X,C,c[i]),enc(c[i]) | ··· |
| ··· | ··· | ··· |

# Fig. 7

SEARCH KEY GENERATION UNIT OF CLIENT TERMINAL 10 (21)

THIRD SEARCH KEY (35a)

FIRST SEARCHED-FOR KEY (34a)

SEARCH CRYPTOGRAM (34f)

SECOND SEARCHED-FOR KEY (34d)

(INDEX i)

SEARCH UNIT (61) → (i∈S)

DERIVATION UNIT (62) → SUBJECT SEARCH KEY (44a)

SEARCH UNIT (61) → (R[i])

(TO CLIENT TERMINAL 10)

EP 2 833 274 A1

# Fig. 8

**Client Terminal 10 flow:**

- CLIENT TERMINAL 10
- S101 — RANDOMLY SELECT SEARCH KEY
- S102 — DEFINE AND OUTPUT SYSTEM VARIABLE AND SECRET KEY
- S103 — GENERATE AND OUTPUT SEARCH KEY SK
- S104 — GENERATE AND OUTPUT SEARCHED-FOR KEY SKD
- S105 — GENERATE AND OUTPUT SEARCH CRYPTOGRAM CP
- S106 — CREATE AND SEND ENCRYPTED TABLES "X" AND "Y"
- S107 — GENERATE AND SEND THIRD SEARCH KEY
- S108 — DECRYPT RECEIVED ROW
- END

**Encrypted Database Server 50 flow:**

- ENCRYPTED DATABASE SERVER 50
- S151 — RECEIVE AND STORE ENCRYPTED TABLES "X" AND "Y"
- S152 — ACQUIRE i∈S FOR WHICH SEARCH KEY COINCIDES WITH SEARCHED-FOR KEY
- S153 — GENERATE SUBJECT SEARCH KEY
- S154 — LINK ROWS TOGETHER USING SUBJECT SEARCH KEY AND SEND RESULT
- END

# Fig. 9

## 250

### ENCRYPTED DATABASE SERVER

```
STORAGE MEANS ~52
    ENCRYPTED TABLE "A" ~241
    ENCRYPTED TABLE "B" ~42

PROCESSOR ~51
    SEARCH UNIT ~61
    DERIVATION UNIT ~262
```

COMMUNICATION MEANS ~53

## 210

### CLIENT TERMINAL

COMMUNICATION MEANS ~15

```
PROCESSOR ~11
    INITIAL SETTING UNIT ~20
    SEARCH KEY GENERATION UNIT ~21
    SEARCHED-FOR KEY GENERATION ~22
    PERMISSION KEY GENERATION UNIT ~223
    SEARCH CRYPTOGRAM GENERATION UNIT ~224
    ENCRYPTION/DECRYPTION UNIT ~25
```

OUTPUT MEANS ~14

INPUT MEANS ~13

SECRET KEY ~33

STORAGE MEANS ~12

ENCRYPTED DATABASE SYSTEM 201

Fig. 10

SECRET KEY — 33

COLUMN "A" — 31a
ELEMENT a[i]

COLUMN "B" — 31b
ELEMENT b[i]

COLUMN "C" — 31c
ELEMENT c[i]

SEARCHED-FOR KEY GENERATION UNIT — 22

SEARCH KEY GENERATION UNIT — 21

SEARCH KEY GENERATION UNIT — 21

SEARCHED-FOR KEY GENERATION UNIT — 22

PERMISSION KEY GENERATION UNIT — 223

SEARCH CRYPTOGRAM GENERATION UNIT — 224

FIRST SEARCHED-FOR KEY — 34a

FIRST SEARCH KEY — 34b

SECOND SEARCH KEY — 34c

SECOND SEARCHED-FOR KEY — 34d

PERMISSION KEY — 234e

SEARCH CRYPTOGRAM — 234f

ENCRYPTION/DECRYPTION UNIT — 25

(TO ENCRYPTED DATABASE SERVER 250)

EP 2 833 274 A1

## Fig. 11

| TABLE "X" | COLUMN "A" | COLUMN "B" | ···(OTHER COLUMNS) |
|---|---|---|---|
| ... | ... | ... | ... |
| i-TH ROW | SEARCHED-FOR KEY (X, A, a[i]), enc(a[i]) | SEARCH CRYPTOGRAM (SEARCH KEY (X,A,a[i]), SEARCH KEY (Y,C,b[i]), PERMISSION KEY ((X,B)→(Y,C)), enc(b[i]) | ... |
| ... | ... | ... | ... |

EP 2 833 274 A1

Fig. 12

SEARCH KEY GENERATION UNIT OF CLIENT TERMINAL 210 — 21

THIRD SEARCH KEY — 35a

FIRST SEARCHED-FOR KEY — 34a

SEARCH CRYPTOGRAM — 234f

SECOND SEARCHED-FOR KEY — 34d

PERMISSION KEY — 235b

PERMISSION KEY GENERATION UNIT OF CLIENT — 223

(INDEX i)

SEARCH UNIT — 61 → (i∈S)

DERIVATION UNIT — 262

SUBJECT SEARCH KEY — 44a

SEARCH UNIT — 61 → (R[i])

(TO CLIENT TERMINAL 210)

EP 2 833 274 A1

# Fig. 13

CLIENT TERMINAL 210

S101
RANDOMLY SELECT SEARCH KEY

S102
DEFINE AND OUTPUT SYSTEM VARIABLE AND SECRET KEY

S103
GENERATE AND OUTPUT SEARCH KEY SK

S104
GENERATE AND OUTPUT SEARCHED-FOR KEY SKD

S305
GENERATE AND OUTPUT PERMISSION KEY GT

S306
GENERATE AND OUTPUT SEARCH CRYPTOGRAM CP

S106
CREATE AND SEND ENCRYPTED TABLES "X" AND "Y"

S307
GENERATE AND SEND THIRD SEARCH KEY AND PERMISSION KEY

S108
DECRYPT RECEIVED ROW

END

ENCRYPTED DATABASE SERVER 250

S151
RECEIVE AND STORE ENCRYPTED TABLES "X" AND "Y"

S152
ACQUIRE I∈S FOR WHICH SEARCH KEY COINCIDES WITH SEARCHED-FOR KEY

S353
GENERATE SUBJECT SEARCH KEY

S154
LINK ROWS TOGETHER USING SUBJECT SEARCH KEY AND SEND RESULT

END

34

# Fig. 14

901 — 901a 901b

| COLUMN IA (NAME) | COLUMN IB (CARD NUMBER) |
|---|---|
| AOYAMA | 12334 |
| IMAI | 30785 |
| UEDA | 48929 |
| EGUCHI | 59876 |
| OKAMOTO | 29864 |

# Fig. 15

902 — 902a 902b

| COLUMN IIB (CARD NUMBER) | COLUMN IIC (EXPIRATION DATE) |
|---|---|
| 12334 | 2011/12/14 |
| 29864 | 2013/11/26 |
| 30785 | 2014/4/7 |
| 48929 | 2012/9/2 |
| 59876 | 2012/8/5 |

## Fig. 16

903     901a     901b (902a)     902b

| COLUMN IA (NAME) | COLUMN IB = IIB (CARD NUMBER) | COLUMN IIC (EXPIRATION DATE) |
|---|---|---|
| AOYAMA | 12334 | 2011/12/14 |
| IMAI | 30785 | 2014/4/7 |
| UEDA | 48929 | 2012/9/2 |
| EGUCHI | 59876 | 2012/8/5 |
| OKAMOTO | 29864 | 2013/11/26 |

## Fig. 17

904     901a     901b (902a)     902b

| COLUMN IA (NAME) | COLUMN IB = IIB (CARD NUMBER) | COLUMN IIC (EXPIRATION DATE) |
|---|---|---|
| UEDA | 48929 | 2012/9/2 |

## Fig. 18

911 911a 911b

| COLUMN IA (NAME) | COLUMN IB (CARD NUMBER) |
|---|---|
| Hash(K,AOYAMA),Enc(k,AOYAMA) | Hash(K,12334),Enc(k,12334) |
| Hash(K,IMAI),Enc(k,IMAI) | Hash(K,30785),Enc(k,30785) |
| Hash(K,UEDA),Enc(k,UEDA) | Hash(K,48929),Enc(k,48929) |
| Hash(K,EGUCHI),Enc(k,EGUCHI) | Hash(K,59876),Enc(k,59876) |
| Hash(K,OKAMOTO),Enc(k,OKAMOTO) | Hash(K,29864),Enc(k,29864) |

## Fig. 19

912 912a 912b

| COLUMN IIB (CARD NUMBER) | COLUMN IIC (EXPIRATION DATE) |
|---|---|
| Hash(K,12334),Enc(k,12334) | Enc(k,2011/12/14) |
| Hash(K,29864),Enc(k,29864) | Enc(k,2013/11/26) |
| Hash(K,30785),Enc(k,30785) | Enc(k,2014/4/7) |
| Hash(K,48929),Enc(k,48929) | Enc(k,2012/9/2) |
| Hash(K,59876),Enc(k,59876) | Enc(k,2012/8/5) |

# Fig. 20

| COLUMN IA (NAME) | COLUMN IB = IIB (CARD NUMBER) | COLUMN IIC (EXPIRATION DATE) |
|---|---|---|
| Hash(K,AOYAMA),Enc(k,AOYAMA) | Hash(K,12334),Enc(k,12334) | Enc(k,2011/12/14) |
| Hash(K,IMAI),Enc(k,IMAI) | Hash(K,30785),Enc(k,30785) | Enc(k,2014/4/7) |
| Hash(K,UEDA),Enc(k,UEDA) | Hash(K,48929),Enc(k,48929) | Enc(k,2012/9/2) |
| Hash(K,EGUCHI),Enc(k,EGUCHI) | Hash(K,59876),Enc(k,59876) | Enc(k,2012/8/5) |
| Hash(K,OKAMOTO),Enc(k,OKAMOTO) | Hash(K,29864),Enc(k,29864) | Enc(k,2013/11/26) |

913  911a  911b (912a)  912b

EP 2 833 274 A1

EP 2 833 274 A1

Fig. 21

| COLUMN IA (NAME) | COLUMN IB = IIB (CARD NUMBER) | COLUMN IIC (EXPIRATION DATE) |
|---|---|---|
| Hash(K,UEDA),Enc(k,UEDA) | Hash(K,48929),Enc(k,48929) | Enc(k,2012/9/2) |

914

911a

911b
(912a)

912b

# Fig. 22

ENCRYPTED DATABASE SERVER — 50

CLIENT TERMINAL — 10

ENCRYPTED DATABASE SYSTEM 1

**INTERNATIONAL SEARCH REPORT**

International application No.

PCT/JP2013/001825

A. CLASSIFICATION OF SUBJECT MATTER
*G06F17/30*(2006.01)i, *G06F21/62*(2013.01)i, *G09C1/00*(2006.01)i

According to International Patent Classification (IPC) or to both national classification and IPC

B. FIELDS SEARCHED

Minimum documentation searched (classification system followed by classification symbols)
G06F17/30, G06F21/62, G09C1/00

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho    1971-2013   Toroku Jitsuyo Shinan Koho   1994-2013

Electronic data base consulted during the international search (name of data base and, where practicable, search terms used)
JSTPlus/JMEDPlus/JST7580(JDreamIII), encryption, database, join

C. DOCUMENTS CONSIDERED TO BE RELEVANT

| Category* | Citation of document, with indication, where appropriate, of the relevant passages | Relevant to claim No. |
|---|---|---|
| Y<br>A | Hasan KADHEM et al., MV-OPES:Multivated-Order Preserving Encryption Scheme: A Novel Scheme for Encrypting Integer Value to Many Different Values, IEICE TRANSACTIONS on Information and Systems, E-93D NO.9, The Institute of Electronics, Information and Communication Engineers, 2010.09.01, p.2520-2533, especially SUMMARY, 1.Introduction, 3 Proposed Multivalue Order Preserving Encryption Scheme, 4. Condition Transactions in Query Processing, 5. Implementing Relational Operators over Encrypted Relations | 1,5-9<br>2-4 |
| Y | US 5987453 A  (Infomix Software, Inc.), 16 November 1999 (16.11.1999), column 1, line 1 to column 2, line 40; column 4, lines 27 to 62 | 1,5-9 |

☒  Further documents are listed in the continuation of Box C.          ☒   See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search<br>24 May, 2013 (24.05.13) | Date of mailing of the international search report<br>04 June, 2013 (04.06.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2013/001825 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 5-81343 A  (Toshiba Corp.),<br>02 April 1993 (02.04.1993),<br>paragraphs [0018], [0057] to [0061]<br>(Family: none) | 1,5-9 |

Form PCT/ISA/210 (continuation of second sheet) (July 2009)

| INTERNATIONAL SEARCH REPORT<br>Information on patent family members | International application No.<br>PCT/JP2013/001825 |
|---|---|

| US 5987453 A | 1999.11.16 | JP 10-320423 A | 1998.12.04 |
| | | EP 877327 A2 | 1998.11.11 |
| | | DE 69839747 D | 2008.09.04 |
| | | AU 5943798 A | 1998.10.08 |
| | | BR 9804282 A | 1999.11.06 |
| | | MX 9802587 A | 1998.12.31 |
| | | CA 2232938 A1 | 1998.10.07 |
| JP 5-81343 A | 1993.04.02 | (Family: none) | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005134990 A
- JP 2010061103 A
- JP 2010272030 A
- JP H04213765 B
- JP 2011147074 A
- JP 2012078222 A

### Non-patent literature cited in the description

- Provably-secure schemes for basic query support in outsourced databases. **G. AMANATIDIS ; A. BOLDYREVA ; A. O'NEILL.** DBSec, volume 4602 of Lecture Notes in Computer Science. Springer, 2007, vol. 4602, 14-30